(19) Europäisches Patentamt
European Patent Office
Office européen des brevets

(11) **EP 4 161 200 B1**

(12) **EUROPEAN PATENT SPECIFICATION**

(45) Date of publication and mention
of the grant of the patent:
**14.08.2024 Bulletin 2024/33**

(51) International Patent Classification (IPC):
**H04W 72/1268** *(2023.01)* **H04W 72/23** *(2023.01)*
**H04L 5/00** *(2006.01)*

(21) Application number: **22198868.6**

(22) Date of filing: **29.09.2022**

(52) Cooperative Patent Classification (CPC):
**H04W 72/1268; H04L 5/0023; H04L 5/0044;**
**H04L 5/0048; H04L 5/0082; H04L 5/0094;**
**H04W 72/23;** H04L 5/001; H04L 5/0064

(54) **USER EQUIPMENT AND METHOD FOR TRANSMITTING CG PUSCH**

BENUTZERGERÄT UND VERFAHREN ZUR ÜBERTRAGUNG VON CG PUSCH

ÉQUIPEMENT UTILISATEUR ET PROCÉDÉ DE TRANSMISSION DE CG PUSCH

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2021 US 202163251496 P**

(43) Date of publication of application:
**05.04.2023 Bulletin 2023/14**

(73) Proprietor: **FG INNOVATION COMPANY LIMITED
Hong Kong (HK)**

(72) Inventor: **WANG, Hai-Han
114 Taipei (TW)**

(74) Representative: **Müller Hoffmann & Partner
Patentanwälte mbB
St.-Martin-Straße 58
81541 München (DE)**

(56) References cited:
- **MODERATOR (ZTE): "Summary on the physical layer aspects of small data transmission", vol. RAN WG1, no. e-Meeting;, 27 August 2021 (2021-08-27), XP052042824, Retrieved from the Internet <URL:https://ftp.3gpp.org/tsg_ran/WG1_RL1/TSGR1_106-e/Inbox/R1-2108561.zip>**
- **MEDIATEK INC: "CG-based SDT", vol. RAN WG2, no. E-meeting;, 23 October 2020 (2020-10-23), XP051942102, Retrieved from the Internet <URL:https://ftp.3gpp.org/tsg_ran/WG2_RL2/TSGR2_112-e/Docs/R2-2009057.zip>**
- **ERICSSON: "Discussion on RAN1 aspects for NR small data transmissions in INACTIVE state", vol. RAN WG1, no. e-Meeting;, 12 May 2021 (2021-05-12), XP052011485, Retrieved from the Internet <URL:https://ftp.3gpp.org/tsg_ran/WG1_RL1/TSGR1_105-e/Docs/R1-2105508.zip>**
- **HUAWEI ET AL: "Physical layer aspects of CG-SDT", vol. RAN WG1, no. E-meeting;, 12 May 2021 (2021-05-12), XP052010736, Retrieved from the Internet <URL:https://ftp.3gpp.org/tsg_ran/WG1_RL1/TSGR1_105-e/Docs/R1-2104282.zip>**

**Description**

FIELD

The present disclosure is related to wireless communication and, more specifically, to transmitting a Configured Grant (CG) Physical Uplink Shared Channel (PUSCH) in a wireless communication system.

BACKGROUND

Various efforts have been made to improve different aspects of wireless communication for cellular wireless communication systems, such as the fifth-generation (5G) New Radio (NR), by improving data rate, latency, reliability, and mobility in these systems. The 5G NR system is designed to provide flexibility and configurability to optimize network services and types, accommodating various use cases, such as enhanced Mobile Broadband (eMBB), massive Machine-Type Communication (mMTC), and Ultra-Reliable and Low-Latency Communication (URLLC). However, as the demand for radio access continues to grow, there exists a need for further improvements in the art, such as improvements in transmitting a Configured Grant (CG) Physical Uplink Shared Channel (PUSCH) in wireless communications.
MODERATOR (ZTE), "Summary on the physical layer aspects of small data transmission", 3GPP DRAFT; R1-2108561, vol. RAN WG1, no. e-Meeting; 27 August 2021, XP052042824, Retrieved from the Internet: URL:https://ftp.3gpp.org/tsg_ran/WG1_RL1/TSGR1_106-e/Inbox/R1-2108561.zip, R1-2108561 Summary on the physical layer aspects of small data transmission.dox relates to mapping details of SSB-to-PUSCH resource and TA validation for CG-SDT.

SUMMARY

The invention is defined by the appended claims. The following aspects may include some but not all features as literally defined in the claims and are present for illustration purposes only.
The present disclosure is related to transmitting a Configured Grant (CG) Physical Uplink Shared Channel (PUSCH) in a wireless communication system.

BRIEF DESCRIPTION OF THE DRAWINGS

Aspects of the present disclosure are best understood from the following detailed disclosure when read with the accompanying drawings. Various features are not drawn to scale. Dimensions of various features may be arbitrarily increased or reduced for clarity of discussion.

FIG. 1 is a diagram illustrating a RACH occasion (RO) mapping example, according to an example implementation of the present disclosure.
FIG. 2 is a diagram illustrating an RO mapping example, according to an example implementation of the present disclosure.
FIG. 3 is a diagram illustrating an SSB-index-to-PUSCH-resource mapping, according to an example implementation of the present disclosure.
FIG. 4 is a diagram illustrating another SSB-index-to-PUSCH-resource mapping, according to the claimed invention.
FIG. 5 is a diagram illustrating an association pattern period, according to the claimed invention.
FIG. 6 is a diagram illustrating a cyclical mapping of SSBs for monitoring occasions, according to an example implementation of the present disclosure.
FIG. 7 is a diagram illustrating a monitoring window, according to an example implementation of the present disclosure.
FIG. 8 is a diagram illustrating a monitoring window with SSBs associated with all POs being mapped, according to an example implementation of the present disclosure.
FIG. 9 is a diagram illustrating a monitoring window with SSBs associated with the same PO and mapping of an associated DMRS, according to an example implementation of the present disclosure.
FIG. 10 is a diagram illustrating another example of a monitoring window, according to an example implementation of the present disclosure.
FIG. 11 is a diagram illustrating another example of a monitoring window, according to an example implementation of the present disclosure.
FIG. 12 is a diagram illustrating another example of a monitoring window, according to an example implementation of the present disclosure.
FIG. 13 is a flowchart illustrating a procedure performed by a UE for transmitting a CG PUSCH, according to the claimed invention.

FIG. 14 is a block diagram illustrating a node for wireless communication, according to an implementation of the present disclosure.

DESCRIPTION

Some of the abbreviations used in this disclosure include:

| Abbreviation | Full name |
| --- | --- |
| 3GPP | 3rd Generation Partnership Project |
| BS | Base Station |
| BWP | Bandwidth Part |
| CA | Carrier Aggregation |
| CCE | Control Channel Element |
| CE | Control Element |
| CG | Configured Grant |
| CN | Core Network |
| CORESET | Control Resource Set |
| CSS | Common Search Space |
| CP | Cyclic Prefix |
| DCI | Downlink Control Information |
| DL | Downlink |
| DMRS | DeModulation Reference Signal |
| eNB | Evolved Node B |
| gNB | Next Generation Node B |
| HARQ | Hybrid Automatic Repeat Request |
| ID | Identifier/Identity |
| IE | Information Element |
| MAC | Medium Access Control |
| MCG | Master Cell Group |
| MCS | Modulation and Coding Scheme |
| MIB | Master Information Block |
| MN | Master Node |
| MO | Mobile Originated |
| MSG | Message |
| MT | Mobile Terminated |
| NR | New Radio |
| NW | Network |
| OFDM | Orthogonal Frequency Division Multiplexing |
| PBCH | Physical Broadcast Channel |
| PCell | Primary Cell |
| PDCCH | Physical Downlink Control Channel |
| PO | PUSCH Occasion |
| PRACH | Physical Random Access Channel |
| PRB | Physical Resource Block |
| PSCell | Primary Secondary Cell |
| PUCCH | Physical Uplink Control Channel |
| PUSCH | Physical Uplink Shared Channel |
| QCL | Quasi Co Location |
| RA | Random Access |
| RACH | Random Access Channel |
| RAR | Random Access Response |
| RAN | Radio Access Network |

(continued)

| Abbreviation | Full name |
|---|---|
| RB | Radio Bearer |
| Rel | Release |
| RF | Radio Frequency |
| RO | RACH Occasion |
| RRC | Radio Resource Control |
| RS | Reference Signal |
| RSRP | Reference Signal Received Power |
| RX | Reception |
| SCell | Secondary Cell |
| SCG | Secondary Cell Group |
| SCH | Shared Channel |
| SCS | Sub Carrier Spacing |
| SDT | Small Data Transmission |
| SFN | System Frame Number |
| SI | System Information |
| SIB | System Information Block |
| SL | Sidelink |
| SLIV | Start and Length Indicator Value |
| SN | Secondary Node |
| SpCell | Special Cell |
| SS | Search Space |
| SSB | Synchronization Signal and PBCH Block |
| TB | Transport Block |
| TBS | Transport Block Size |
| TCI | Transmission Configuration Indicator |
| TS | Technical Specification |
| Tx | Transmission |
| UE | User Equipment |
| UL | Uplink |
| USS | UE-specific Search Space |
| URLLC | Ultra-Reliable and Low Latency Communication |

The following contains specific information related to implementations of the present disclosure. The drawings and their accompanying detailed disclosure are merely directed to implementations. However, the present disclosure is not limited to these implementations.

Unless noted otherwise, like or corresponding elements among the drawings may be indicated by like or corresponding reference numerals. Moreover, the drawings and illustrations in the present disclosure are generally not to scale and are not intended to correspond to actual relative dimensions.

For the purposes of consistency and ease of understanding, like features may be identified (although, in some examples, not illustrated) by the same numerals in the drawings. However, the features in different implementations may be different in other respects and shall not be narrowly confined to what is illustrated in the drawings.

The phrases "in one implementation," or "in some implementations," may each refer to one or more of the same or different implementations. The term "coupled" is defined as connected whether directly or indirectly via intervening components and is not necessarily limited to physical connections. The term "comprising" means "including, but not necessarily limited to" and specifically indicates open-ended inclusion or membership in the so-disclosed combination, group, series, or equivalent. The expression "at least one of A, B and C", "at least one of A, B or C" or "at least one of the following: A, B and C" means "only A, or only B, or only C, or any combination of A, B and C."

The terms "system" and "network" may be used interchangeably. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

Additionally, for the purpose of non-limiting explanation, specific details, such as functional entities, techniques, protocols, standards, and the like, are set forth for providing an understanding of the disclosed technology. In other examples, a detailed disclosure of well-known methods, technologies, systems, architectures, and the like are omitted in order not to obscure the present disclosure with unnecessary details.

Persons skilled in the art will immediately recognize that any NW function(s) or algorithm(s) in the present disclosure may be implemented by hardware, software, or a combination of software and hardware. Disclosed functions may correspond to modules that may be software, hardware, firmware, or any combination thereof. The software implementation may include computer-executable instructions stored on computer-readable media such as memory or other types of storage devices.

For example, one or more microprocessors or general-purpose computers with communication processing capability may be programmed with corresponding executable instructions and carry out the disclosed NW function(s) or algorithm(s). The microprocessors or general-purpose computers may be formed of Application-Specific Integrated Circuits (ASICs), programmable logic arrays, and/or using one or more Digital Signal Processor (DSPs). Although some of the example implementations in the present disclosure are directed to software installed and executing on computer hardware, alternative example implementations implemented as firmware, as hardware, or as a combination of hardware and software are well within the scope of the present disclosure.

The computer-readable medium includes but is not limited to Random Access Memory (RAM), Read-Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication NW architecture (e.g., a Long-Term Evolution (LTE) system, an LTE-Advanced (LTE-A) system, or an LTE-Advanced Pro system) typically includes at least one BS, at least one UE, and one or more optional NW elements that provide connection towards an NW. The UE communicates with the NW (e.g., a CN, an Evolved Packet Core (EPC) NW, an Evolved Universal Terrestrial Radio Access NW (E-UTRAN), a Next-Generation Core (NGC), a 5G Core (5GC) Network or an Internet), through a RAN established by the BS/Cell.

It should be noted that, in the present disclosure, a UE may include, but is not limited to, a mobile station, a mobile terminal or device, a user communication radio terminal. For example, a UE may be a portable radio equipment, which includes, but is not limited to, a mobile phone, a tablet, a wearable device, a sensor, or a Personal Digital Assistant (PDA) with wireless communication capability. The UE is configured to receive and transmit signals over an air interface to one or more cells in a RAN.

ABS may include, but is not limited to, a Node B (NB) as in the Universal Mobile Telecommunication System (UMTS), an eNB as in the LTE-A, a Radio NW Controller (RNC) as in the UMTS, a Base Station Controller (BSC) as in the Global System for Mobile communications (GSM)/GSM EDGE (Enhanced Data rates for GSM Evolution) Radio Access NW (GERAN), a Next Generation eNB (ng-eNB) as in an E-UTRABS in connection with the 5GC, a gNB as in the 5G Access NW (5G-AN), and any other apparatus capable of controlling radio communication and managing radio resources within a cell. The BS may connect to serve the one or more UEs through a radio interface to the NW.

A BS may be configured to provide communication services according to at least one of the following Radio Access Technologies (RATs): Worldwide Interoperability for Microwave Access (WiMAX), GSM (often referred to as 2G), GERAN, General Packet Radio Service (GPRS), UMTS (often referred to as 3G) based on basic Wideband-Code Division Multiple Access (W-CDMA), High-Speed Packet Access (HSPA), LTE, LTE-A, enhanced LTE (eLTE), NR (often referred to as 5G), LTE-A Pro, and a next generation RAT. However, the scope of the present disclosure should not be limited to the protocols previously disclosed.

ABS may be operable to provide radio coverage to a specific geographical area using a plurality of cells included in the RAN. The BS may support the operations of the cells. Each cell is operable to provide services to at least one UE within its radio coverage. More specifically, each cell (often referred to as a serving cell) may provide services to serve one or more UEs within its radio coverage (e.g., each cell schedules the DL and optionally UL resources to at least one UE within its radio coverage for DL and optionally UL packet transmissions). The BS may communicate with one or more UEs in the radio communication system through the plurality of cells. A cell may allocate sidelink (SL) resources for supporting proximity service (ProSe). Each cell may have overlapped coverage areas with other cells.

In Multi-RAT Dual Connectivity (MR-DC) cases, the primary cell of an MCG or an SCG may be called a SpCell. APCell may refer to the SpCell of an MCG. APSCell may refer to the SpCell of an SCG. MCG refers to a group of serving cells associated with an MN, including the SpCell and optionally one or more SCells. SCG refers to a group of serving cells associated with a Secondary Node (SN), including the SpCell and optionally one or more SCells.

In some implementations, the UE may not have (LTE/NR) RRC connections with the concerned serving cells of the associated services. In other words, the UE may not have UE-specific RRC signal exchange with the serving cell. Instead, the UE may only monitor the DL synchronization signals (e.g., DL synchronization burst sets) and/or broadcast SI related to the concerned services from such serving cells. In addition, the UE may have at least one serving cell on one or more target SL frequency carriers for the associated services. In some other implementations, the UE may consider the RAN which configures one or more of the serving cells as a serving RAN.

As previously disclosed, the frame structure for NR supports flexible configurations for accommodating various next generation (e.g., 5G) communication requirements, such as eMBB, mMTC, and URLLC, while fulfilling high reliability, high data rate, and low latency requirements. The OFDM technology, as disclosed in 3GPP, may serve as a baseline for an NR waveform. The scalable OFDM numerology, such as the adaptive sub-carrier spacing, the channel bandwidth, and the CP, may also be used. Additionally, two coding schemes are considered for NR: (1) low-density parity-check (LDPC) code and (2) polar code. The coding scheme adaption may be configured based on the channel conditions and/or service applications.

It should also be noted that in a transmission time interval of a single NR frame, at least DL transmission data, a guard period, and UL transmission data should be included. The respective portions of the DL transmission data, the guard period, and the UL transmission data should also be configurable, for example, based on the NW dynamics of NR. In addition, SL resources may also be provided in an NR frame to support ProSe services.

Any two or more than two of the following sentences, paragraphs, (sub)-bullets, points, actions, behaviors, terms, alternatives, aspects, examples, or claims described in the following invention(s) may be combined logically, reasonably, and properly to form a specific method.

Any sentence, paragraph, (sub)-bullet, point, action, behaviors, terms, alternatives, aspects, examples, or claims described in the following invention(s) may be implemented independently and separately to form a specific method.

Dependency, such as "based on", "more specifically", "preferably", "in one embodiment", "in one alternative", "in one example", "in one aspect", "in one implementation", etc., in the present disclosure is just one possible example which would not restrict the specific method.

In some implementation, NR may support an RRC_INACTIVE state, and UEs with infrequent (periodic and/or non-periodic) data transmission may be maintained by the NW in the RRC_INACTIVE state. Until Rel-16, the RRC_INACTIVE state may not support the data transmission. Hence, the UE has to resume the connection (i.e. transition to an RRC_CONNECTED state) for any DL (MT) and UL (MO) data. A Connection setup and a subsequently release to the RRC_INACTIVE state may happen for each data transmission no matter how small and infrequent the data packets are, such that unnecessary power consumption and signaling overhead may occur. The signaling overhead for the UE in the RRC _INACTIVE state with small data packets may be a general problem, which may become a critical issue if more UEs are served in NR while considering not only performance and efficiency of the NW but also battery performance of the UE(s). As such, any device that has intermittent small data packets in the RRC _INACTIVE state may be benefit if it is allowable to perform/enable the SDT in the RRC _INACTIVE state.

Examples of some terms used in this disclosure are provided as follows.

**BWP:** A subset of the total cell bandwidths of a cell may be referred to as a BWP and a bandwidth part adaptation may be achieved by configuring the UE with BWP(s) and instructing the UE about which of the configured BWPs is currently an active BWP. To enable Bandwidth Adaptation (BA) on the PCell, the gNB may configure the UE with UL and DL BWP(s) for the PCell. To enable BA on SCells in a case of CA, the gNB may configure the UE with UL and DL BWP(s) for the SCells. For the PCell, the initial BWP may be the BWP that is used for initial access. For the SCell(s), the initial BWP may be the BWP that is configured for the UE to operate during the SCell activation. The UE may be configured with a first active UL BWP by an information element (IE), such as a *firstActiveUplinkBWP* IE. If the first active UL BWP is configured for an SpCell, the *firstActiveUplinkBWP* IE field may include an ID of the UL BWP that is to be activated upon performing the RRC (re-)configuration. If the field is absent, the RRC (re-)configuration may not impose a BWP switch. If the first active UL BWP is configured for an SCell, the *firstActiveUplinkBWP* IE field may include an ID of the UL BWP to be used upon a MAC-activation of an SCell.

In some implementations, an SSB may be used by the UE for measurement of the signal strength of a cell, and the SSB may carry a MIB that includes configuration of a CORESET 0 and an SS 0 that is used for scheduling a SIB1. The SIB1 may carry configurations related to a cell selection and an initial access, e.g., a PRACH resource configuration. The UE may evaluate measured results based on the configurations in the SIB 1 to determine whether to camp on the cell and perform the initial access. During the initial access, an initial DL BWP may be defined as the PRBs that may include the CORESET 0. The initial DL BWP may be used for receiving a RACH procedure-related DL messages, e.g., a RAR, an MSG4, and other messages before a dedicated DL BWP is configured by a gNB. The initial DL BWP may also be used for receiving SI and paging messages. Specifically, a Type-1 CSS may be configured by the SIB1 to be associated with the CORESET 0 or a CORESET configured by commonControlResourceSet for receiving a DCI that schedules the RAR, the MSG4, and other messages before the dedicated DL BWP is configured by the gNB. The Type-2 CSS may be configured by the SIB1 to be associated with the CORESET 0 or a CORESET configured by commonControlResourceSet for receiving a DCI that schedules paging messages. After the initial access, the initial DL BWP may be defined as the PRBs configured by the initial DL BWP configuration carried in the SIB 1, if the PRBs are configured. Alternatively, the initial DL BWP may be the same as the one being used during the initial access.

In some implementations, during (and after) the initial access, the initial UL BWP may be defined as the PRBs that are configured by the initial UL BWP configuration carried in the SIB1.

In some implementations (e.g., as the ones specified by Rel-15), PRACH resources for the initial access may be configured by the SIB 1. Specifically, the initial UL BWP configuration provided by the SIB1 may include a BWP-UplinkCommon having a RACH-ConfigCommon that is used to configure PRACH resources, as shown in **Table 1** below. For UEs in the RRC_CONNECTED state, the PRACH resources may also be configured in other UL BWPs, and the UEs may use the PRACH resources when the UL BWP with the PRACH resources is the active UL BWP.

## Table 1

| | |
|---|---|
| BWP-UplinkCommon ::= | SEQUENCE { |
| genericParameters | BWP, |
| rach-ConfigCommon | SetupRelease { RACH-ConfigCommon } |
| OPTIONAL, -- Need M | |
| pusch-ConfigCommon | SetupRelease { PUSCH-ConfigCommon } |
| OPTIONAL, -- Need M | |
| pucch-ConfigCommon | SetupRelease { PUCCH-ConfigCommon } |
| OPTIONAL, -- Need M | |
| ..., | |
| [[ | |
| rach-ConfigCommonIAB-r16 | SetupRelease { RACH-ConfigCommon } |
| OPTIONAL, -- Need M | |
| useInterlacePUCCH-PUSCH-r16 | ENUMERATED {enabled} |
| OPTIONAL, -- Need R | |
| msgA-ConfigCommon-r16 | SetupRelease { MsgA-ConfigCommon-r16 } |
| OPTIONAL -- Cond SpCellOnly2 | |
| ]] | |
| } | |

In some implementations, the RACH-ConfigCommon may include the following IEs. A rach-ConfigGeneric (IE) may include configuration of time and frequency resources of a PRACH. A totalNumberOfRA-Preambles (IE) may be used to configure a total number of preambles used for contention based/contention free 4-step or 2-step RA in the PRACH resources defined in the RACH-ConfigCommon. An ssb-perRACH-OccasionAndCB-PreamblesPerSSB (IE) may define two parameters, e.g., an ssb-perRACH-Occasion and a CB-PreamblesPerSSB. An ssb-perRACH-Occasion may be used to configure the mapping ratio of an SSB-to-RACH occasion (SSB-to-RO) mapping. When a value configured by the ssb-perRACH-Occasion is smaller than one, e.g. 1/N (e.g., N being a positive integer), one SSB may be mapped to N consecutive ROs. Alternatively, when a value configured by the ssb-perRACH-Occasion is larger than one, e.g., N, N SSBs may be mapped to one RO. A CB-PreamblesPerSSB may be used to configure a number of preambles mapped to an SSB in an RO for the contention based 4-step RA. The preambles may be divided into two groups of preambles, e.g., a group A and a group B. These two groups of preambles may be used to differentiate the TBS of a MSG3 PUSCH. As such, when the TBS of the MSG3 PUSCH is greater than a value configured by an ra-Msg3 SizeGroupA (IE), the UE may select a preamble from the group B, such that the gNB may allocate a larger TBS for the MSG3 PUSCH upon detection of the preamble from the group B.

A groupBconfigured (IE) may include an ra-Msg3 SizeGroupA and a numberOfRA-PreamblesGroupA, where the numberOfRA-PreamblesGroupA may be used to configure a number of preambles of the group A mapped to an SSB in an RO for the contention based 4-step RA. In other words, a number of preambles of the group B mapped to an SSB in an RO for the contention based 4-step RA may be determined implicitly as the number of preambles mapped to an SSB in an RO minus the number of preambles of the group A mapped to an SSB in an RO. Noticeably, the preamble indexes of preambles of the group A may be lower than the preamble indexes of preambles of the group B, and the lowest preamble index of the preamble indexes of the group B may be the highest preamble index of the preambles indexes of the group A plus one. In some implementations, e.g., as specified by Rel-15, the number of preambles mapped to an SSB in an RO for contention free 4-step RA may be determined as $N_{preamble}^{total}/\text{N}$ minus $N_{preamble,SSB}^{CB}$, where N is the number of SSBs mapped to an RO, $N_{preamble}^{total}$ is the value provided by totalNumberOfRA-Preambles, and $N_{preamble,SSB}^{CB}$ is the value provided by the CB-PreamblesPerSSB. In some implementations, e.g., as specified by Rel-16, the preambles for the contention free 4-step RA of UEs (e.g., supported by Rel-15) may be configured as preambles for the contention based/contention free 2-step RA. Noticeably, the gNB may ensure that a preamble allocated to the UE (e.g., supported by Rel-15) for the contention free 4-step RA is not selected from the preambles configured for the contention based/contention free 2-step RA for UEs (e.g., supported by Rel-16).

In some implementations, for SSB-to-RO mapping, SSB indexes provided by an *ssb-PositionsInBurst* in a SIB 1 or in a *ServingCellConfigCommon* may be mapped to valid ROs in the following order:

- First, in an increasing order of preamble indexes within a single RO.
- Second, in an increasing order of frequency resource indexes for frequency multiplexed ROs.
- Third, in an increasing order of time resource indexes for time multiplexed ROs within a PRACH slot.
- Fourth, in an increasing order of indexes for PRACH slots.

In some implementations, an association period, starting from a frame 0, for mapping SSB indexes to ROs is the smallest value in a set determined by the PRACH configuration period based on **Table** 2 below, such that $N_{\text{Tx}}^{\text{SSB}}$ SSB indexes are mapped at least once to the ROs within the association period, where the UE obtains $N_{\text{Tx}}^{\text{SSB}}$ from the value of the *ssb-PositionsInBurst* in a SIB 1 or in a *ServingCellConfigCommon.* If there is a set of ROs or PRACH preambles that are not mapped to $N_{\text{Tx}}^{\text{SSB}}$ SSB indexes after an integer number of SSB indexes to ROs mapping cycles within the association period, no SSB indexes may be mapped to the set of ROs or PRACH preambles. An association pattern period may include one or more association periods, and may be determined such that a pattern between the ROs and the SSB indexes may repeat at most every 160 milliseconds (ms). The ROs that are not associated with SSB indexes after an integer number of association periods (if any) may be not used for PRACH transmissions.

**Table 2**

| PRACH configuration period (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

In some implementations, a PRACH mask index may be configured by RRC signaling, e.g., a handover command, or may be indicated by a PDCCH order, which indicates the ROs that may be selected for the RA procedure triggered by the RRC signaling or the PDCCH order. The ROs are mapped consecutively per corresponding SSB indexes. The indexing of the RO indicated by the PRACH mask index value may be reset per mapping cycle of consecutive ROs with one corresponding SSB index. For a PRACH transmission, the UE may select the RO indicated by the PRACH mask index value for the indicated SSB index in the first available mapping cycle. The ROs indicated by the PRACH mask indexes are shown in **Table 3** below.

**Table 3**

| PRACH Mask Index/ *msgA-SSB-SharedRO-MaskIndex* | Allowed RO(s) of SSB |
|---|---|
| 0 | All |

(continued)

| PRACH Mask Index/ *msgA-SSB-SharedRO-MaskIndex* | Allowed RO(s) of SSB |
|---|---|
| 1 | RO index 1 |
| 2 | RO index 2 |
| 3 | RO index 3 |
| 4 | RO index 4 |
| 5 | RO index 5 |
| 6 | RO index 6 |
| 7 | RO index 7 |
| 8 | RO index 8 |
| 9 | Every even RO |
| 10 | Every odd RO |
| 11 | Reserved |
| 12 | Reserved |
| 13 | Reserved |
| 14 | Reserved |
| 15 | Reserved |

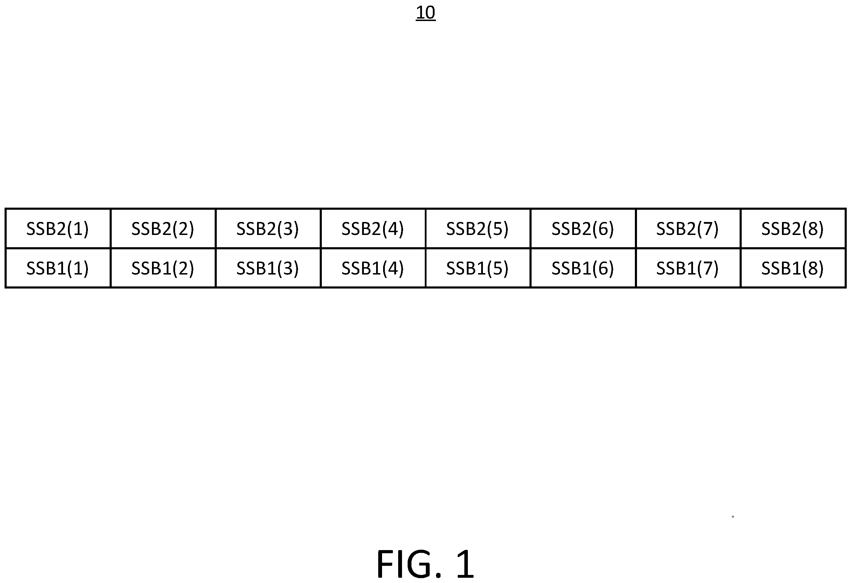

FIG. 1 is a diagram illustrating an RO mapping example 10, according to an example implementation of the present disclosure. As shown in FIG. 1, it is assumed that the ssb-perRACH-Occasion having a value of one, two FDMed ROs, and two SSBs are transmitted. The values in the parenthesis are the RO indexes. One mapping cycle is demonstrated in the RO mapping example 10.

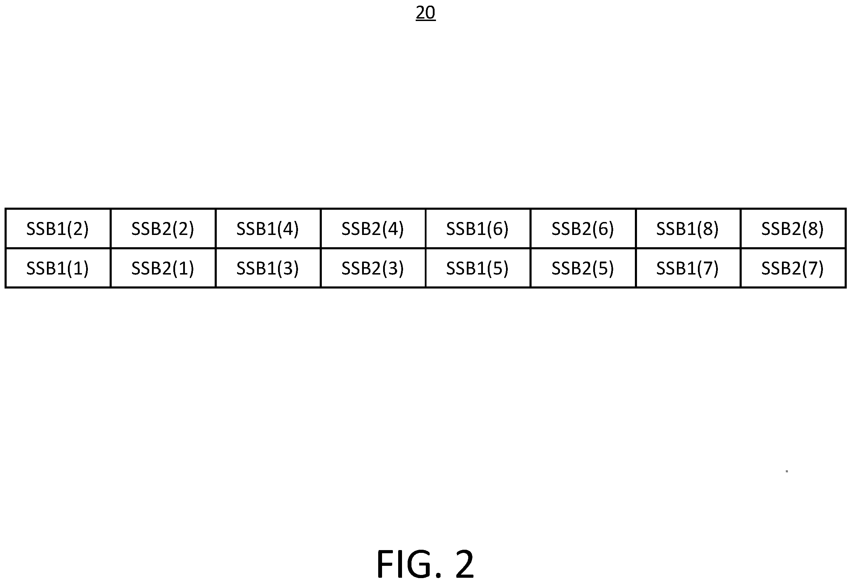

FIG. 2 is a diagram illustrating an RO mapping example 20, according to an example implementation of the present disclosure. As shown in FIG. 2, it is assumed that the ssb-perRACH-Occasion having a value of 1/2, two FDMed ROs, and two SSBs are transmitted. The values in the parenthesis are the RO indexes. One mapping cycle is demonstrated in the RO mapping example 20. In addition, **Table 4** is introduced below for additional examples.

## Table 4

```
RACH-ConfigCommon ::=                    SEQUENCE {
    rach-ConfigGeneric                   RACH-ConfigGeneric,
    totalNumberOfRA-Preambles            INTEGER (1..63)
OPTIONAL,     -- Need S
    ssb-perRACH-OccasionAndCB-PreamblesPerSSB     CHOICE {
        oneEighth                                 ENUMERATED
{n4,n8,n12,n16,n20,n24,n28,n32,n36,n40,n44,n48,n52,n56,n60,n64},
        oneFourth                                 ENUMERATED
{n4,n8,n12,n16,n20,n24,n28,n32,n36,n40,n44,n48,n52,n56,n60,n64},
        oneHalf                                   ENUMERATED
{n4,n8,n12,n16,n20,n24,n28,n32,n36,n40,n44,n48,n52,n56,n60,n64},
        one                                       ENUMERATED
{n4,n8,n12,n16,n20,n24,n28,n32,n36,n40,n44,n48,n52,n56,n60,n64},
        two                                       ENUMERATED
{n4,n8,n12,n16,n20,n24,n28,n32},
        four                                      INTEGER (1..16),
        eight                                     INTEGER (1..8),
        sixteen                                   INTEGER (1..4)
    }
OPTIONAL,     -- Need M


    groupBconfigured                     SEQUENCE {
        ra-Msg3SizeGroupA                ENUMERATED {b56, b144, b208, b256,
b282, b480, b640,
                                                     b800, b1000, b72, spare6,
spare5,spare4, spare3, spare2, spare1},
        messagePowerOffsetGroupB         ENUMERATED { minusinfinity, dB0, dB5,
dB8, dB10, dB12, dB15, dB18},
        numberOfRA-PreamblesGroupA       INTEGER (1..64)
    }
OPTIONAL,     -- Need R
```

In some implementations, the RACH-ConfigGeneric may include a prach-ConfigurationIndex and an msg1-FDM, as shown in **Table 5** below. The prach-ConfigurationIndex may be used to indicate an index to a table for PRACH configurations. The PRACH configurations may include a preamble format, a periodicity of PRACH resource, a slot index or a subframe index corresponding to a slot or a subframe in which there is a PRACH resource, a number of PRACH slots within a slot or within a subframe, a number of ROs within a PRACH slot, a starting symbol of the ROs within a PRACH slot and a duration of one RO. The msg1-FDM may be used to configure a number of Frequency Division Multiplexed (FDMed) ROs, denoted as F. As such, for each time domain resource of an RO configured by the prach-ConfigurationIndex, there are F ROs that are FDMed in the time domain resource. The FDMed ROs may be consecutive in the frequency domain. The msg1-FrequencyStart may be used to indicate the starting PRB of the first RO among the F FDMed ROs, where the first RO has the lowest value in the frequency domain.

**Table 5**

| | |
|---|---|
| RACH-ConfigGeneric ::= | SEQUENCE { |
| prach-ConfigurationIndex | INTEGER (0..255), |
| msg1-FDM | ENUMERATED {one, two, four, eight}, |
| msg1-FrequencyStart | INTEGER (0..maxNrofPhysicalResourceBlocks-1), |
| zeroCorrelationZoneConfig | INTEGER(0..15), |
| preambleReceivedTargetPower | INTEGER (-202..-60), |
| preambleTransMax | ENUMERATED {n3, n4, n5, n6, n7, n8, n10, n20, n50, n100, n200}, |
| powerRampingStep | ENUMERATED {dB0, dB2, dB4, dB6}, |
| ra-ResponseWindow | ENUMERATED {sl1, sl2, sl4, sl8, sl10, sl20, sl40, sl80}, |
| ..., | |
| [[ | |
| prach-ConfigurationPeriodScaling-IAB-r16 | ENUMERATED |
| {scf1,scf2,scf4,scf8,scf16,scf32,scf64} | OPTIONAL, -- Need R |
| prach-ConfigurationFrameOffset-IAB-r16 | INTEGER (0..63) OPTIONAL, -- Need R |
| prach-ConfigurationSOffset-IAB-r16 | INTEGER (0..39) OPTIONAL, -- Need R |
| ra-ResponseWindow-v1610 | ENUMERATED { sl60, sl160} OPTIONAL, -- Need R |
| prach-ConfigurationIndex-v1610 | INTEGER (256..262) OPTIONAL -- Need R |
| ]] | |
| } | |

In some implementations, for paired spectrum or supplementary UL band, all ROs indicated by the prach-ConfigurationIndex may be valid. In some implementations, for unpaired spectrum, ROs indicated by the prach-ConfigurationIndex may be subject to validation complying with following rules.

In one rule, if a UE is not provided with a *tdd-UL-DL-ConfigurationCommon,* a RO in a PRACH slot may be valid if the RO does not precede an SSB in the PRACH slot and starts at least $N_{gap}$ symbols after the last SSB reception symbol, where $N_{gap}$ is provided in Table 6 below and, if *channelAccessMode = semistatic* is provided, the RO does not overlap with a set of consecutive symbols before an initiation of a next channel occupancy time where the UE does not transmit. In one example, a candidate SSB index of the SSB may correspond to the SSB index provided by the *ssb-PositionsInBurst* in the SIB1 or in the

*ServingCellConfigCommon.*

In another rule, if a UE is provided with a *tdd-UL-DL-ConfigurationCommon,* an RO in a PRACH slot may be valid if the RO is within the UL symbols; or the RO does not precede an SSB in the PRACH slot and starts at least $N_{gap}$ symbols after the last DL symbol and at least $N_{gap}$ symbols after the last SSB symbol, where $N_{gap}$ is provided in **Table 6** below, and if *channelAccessMode = semistatic* is provided, the RO does not overlap with a set of consecutive symbols before an initiation of a next channel occupancy time, where there should be no transmission. In one example, the candidate SSB index of the SSB may correspond to the SSB index provided by the *ssb-PositionsInBurst* in the SIB1 or in the

*ServingCellConfigCommon.*

**Table 6**

| Preamble SCS | $N_{gap}$ |
|---|---|
| 1.25 kHz or 5 kHz | 0 |
| 15 kHz or 30 kHz or 60 kHz or 120 kHz | 2 |

In some implementations, the 2-step RA may be introduced (e.g., when applying Rel-16). For the 2-step RA, a PRACH preamble transmission may be followed by an MSGA PUSCH transmission, where the MSGA PUSCH may be preconfigured. The MsgA PUSCH in the 2-step RA may include contents that are normally included in an MSG3 PUSCH transmission in the 4-step RA. The PRACH resources for the 2-step RA may be shared with the PRACH resources for the 4-step RA. Alternatively, the PRACH resources for the 2-step RA may be different from the PRACH resources for the 4-step RA.

In some implementations, the BWP-UplinkCommon may include an msgA-ConfigCommon-r16 that is used to configure PRACH resources and MSGA PUSCH resources. Similar to the 4-step RA, the BWP-UplinkCommon for initial UL BWP and other BWPs may include the msgA-ConfigCommon-r16. The msgA-ConfigCommon-r16 may include a rach-ConfigCommonTwoStepRA-r16 and an msgA-PUSCH-Config-r16, where the rach-ConfigCommonTwoStepRA-r16 and the msgA-PUSCH-Config-r16 may be used to configure the PRACH resources and the MsgA PUSCH resources, respectively. The rach-ConfigCommonTwoStepRA-r16 may include similar configurations as those included in a rach-ConfigCommon. Some of the configurations in the rach-ConfigCommonTwoStepRA-r16 may be present when the ROs for the 2-step RA are different from the ROs for the 2-step RA. When the configurations are absent in the rach-Config-CommonTwoStepRA-r16, the corresponding configurations in the rach-ConfigCommon may be applied for the PRACH resources for the 2-step RA. For example, when ROs for the 2-step RA and ROs for the 4-step RA are separately configured, a parameter msgA-SSB-PerRACH-OccasionAndCB-PreamblesPerSSB may configure a number of SSBs mapped to an RO and a number of contention-based preambles for each SSB under the 2-step RA. If the parameter msgA-SSB-PerRACH-OccasionAndCB-PreamblesPerSSB is not configured, a corresponding 4-step RA parameter may be used for the 2-step RACH, e.g., via an SSB-PerRACH-OccasionAndCB-PreamblesPerSSB. Alternatively, when ROs for the 2-step RA and ROs for the 4-step RA are shared, a number of contention-based preambles for an SSB in an RO for the 2-step RA may be configured by an msgA-CB-PreamblesPerSSB-PerSharedRO. Noticeably, a value configured by the msgA-CB-PreamblesPerSSB-PerSharedRO may not exceed a number of preambles per SSB minus a number of contention-based preambles per SSB for the 4-step RA, since the preambles being configured for the 2-step RA for an SSB may be the preambles that may only be used by the UEs (e.g., supporting Rel-15) as the contention free preambles for the 4-step RA for the SSB. The preamble with the lowest preamble index configured for the 2-step RA for an SSB may be the preamble with the lowest preamble index for the SSB that may only be used by the UEs (e.g., supporting Rel-15) as the contention free preamble for the 4-step RA.

Similar to the 4-step RA, the preambles for the 2-step RA may be divided into two groups of preambles, e.g., a group A and a group B. When two groups of preambles are configured, two MsgA PUSCH configurations may be provided by an msgA-PUSCH-ResourceGroupA-r16 and an msgA-PUSCH-ResourceGroupB-r16 and each one may correspond to one group of preambles. Alternatively, when grouping of preambles is not configured, one MSGA PUSCH configuration may be provided by the m sg A-PU S CH-Re sourceGroup A-r 16.

In some implementations, the two groups of preambles may be used to differentiate the MSGA PUSCH that may be used for transmitting a first set of TBS from the MSGA PUSCH that may be used for transmitting a second set of TBS. When the TBS of the MSGA PUSCH is greater than a value configured by an ra-MsgASizeGroupA, the UE may select a preamble from the group B. As such, the UE may use the MSGA PUSCH resource configured by the msgA-PUSCH-ResourceGroupB-r16 for transmission of the MSGA. Alternatively, when the UE selects a preamble from the group A, the UE may use the MSGA PUSCH resource configured by the msgA-PUSCH-ResourceGroupA-r16 for transmission of the MSGA. A groupBconfigured may include the ra-MsgASizeGroupA and the numberOfRA-PreamblesGroupA, where the numberOfRA-PreamblesGroupA may be used to configure a number of preambles of the group A mapped to an SSB in an RO for the contention based 2-step RA. As such, a number of preambles of the group B mapped to an SSB in an RO for the contention based 2-step RA may be determined implicitly, for example, as a number of preambles mapped to an SSB in an RO for the contention based 2-step RA minus a number of preambles of the group A mapped to an SSB in an RO for the contention based 2-step RA. Noticeably, preamble indexes of preambles of the group A may have lower values than preamble indexes of preambles of the group B, and the lowest preamble index of the preamble indexes of the group B may be the highest preamble index of the preambles indexes of the group A plus one.

In some implementations, when ROs for the 2-step RA and ROs for the 4-step RA are shared, the PRACH transmission may be on a subset of ROs associated with the same SSB index within an SSB-to-RO mapping cycle, for example, when a PRACH mask index configured by the msgA-SSB-SharedRO-MaskIndex is provided.

## Table 7

| | |
|---|---|
| MsgA-ConfigCommon-r16 ::= | SEQUENCE { |
|     rach-ConfigCommonTwoStepRA-r16 | RACH-ConfigCommonTwoStepRA-r16, |
|     msgA-PUSCH-Config-r16 | MsgA-PUSCH-Config-r16 |
| OPTIONAL --Cond InitialBWPConfig | |
| } | |
| MsgA-PUSCH-Config-r16 ::= | SEQUENCE { |
|     msgA-PUSCH-ResourceGroupA-r16 | MsgA-PUSCH-Resource-r16 |
| OPTIONAL, -- Cond InitialBWPConfig | |

```
    msgA-PUSCH-ResourceGroupB-r16                    MsgA-PUSCH-Resource-r16
OPTIONAL, -- Cond GroupBConfigured
    msgA-TransformPrecoder-r16                       ENUMERATED {enabled, disabled}
OPTIONAL, -- Need R
    msgA-DataScramblingIndex-r16                     INTEGER (0..1023)
OPTIONAL, -- Need S
    msgA-DeltaPreamble-r16                           INTEGER (-1..6)
OPTIONAL    -- Need R
}


MsgA-PUSCH-Resource-r16 ::=                          SEQUENCE {
    msgA-MCS-r16                                         INTEGER (0..15),
    nrofSlotsMsgA-PUSCH-r16                              INTEGER (1..4),
    nrofMsgA-PO-PerSlot-r16                             ENUMERATED {one, two, three, six},
    msgA-PUSCH-TimeDomainOffset-r16                      INTEGER (1..32),
    msgA-PUSCH-TimeDomainAllocation-r16                  INTEGER
(1..maxNrofUL-Allocations)                           OPTIONAL, -- Need S
    startSymbolAndLengthMsgA-PO-r16                      INTEGER (0..127)
OPTIONAL, -- Need S
    mappingTypeMsgA-PUSCH-r16                            ENUMERATED {typeA, typeB}
OPTIONAL, -- Need S
    guardPeriodMsgA-PUSCH-r16                            INTEGER (0..3)
OPTIONAL, -- Need R
    guardBandMsgA-PUSCH-r16                              INTEGER (0..1),
    frequencyStartMsgA-PUSCH-r16                      INTEGER
(0..maxNrofPhysicalResourceBlocks-1),
    nrofPRBs-PerMsgA-PO-r16                              INTEGER (1..32),
    nrofMsgA-PO-FDM-r16                                  ENUMERATED {one, two, four,
eight},
    msgA-IntraSlotFrequencyHopping-r16               ENUMERATED {enabled}
OPTIONAL, -- Need R
    msgA-HoppingBits-r16                                BIT STRING (SIZE(2))
OPTIONAL, -- Cond FreqHopConfigured
    msgA-DMRS-Config-r16                                MsgA-DMRS-Config-r16,
    nrofDMRS-Sequences-r16                              INTEGER (1..2),
    msgA-Alpha-r16                                      ENUMERATED {alpha0, alpha04,
alpha05, alpha06,
```

```
                                                                    alpha07, alpha08,
alpha09, alpha1}                        OPTIONAL, -- Need S
        interlaceIndexFirstPO-MsgA-PUSCH-r16              INTEGER (1..10)
OPTIONAL, -- Need R
        nrofInterlacesPerMsgA-PO-r16                     INTEGER (1..10)
OPTIONAL, -- Need R

        ...

}
```

**Table 7** above is introduced to show more examples. In some implementations, PRACH preambles for the 2-step RA may be mapped to MSGA PUSCH resources (e.g., also referred to as PUSCH occasions (PO)). An MSGA may be transmitted by the UE in a PO if the UE has transmitted a PRACH preamble and if the PRACH preamble is mapped to the PO. When a PRACH preamble in group B for the 2-step RA is configured, PRACH preambles of a PRACH preamble in group A may be mapped to the MSGA PUSCH resources configured by the msgA-PUSCH-ResourceGroupA-r16, and PRACH preambles of a PRACH preamble group B may be mapped to the MSGA PUSCH resources configured by the m sg A-PU S CH-Re sourceGroupB -r 16.

In some implementations, multiple DMRS resources may be configured for a PO. A DMRS configuration may be provided by a *msgA-DMRS-Config* per PUSCH configuration. One or more DMRS ports and one or more DMRS sequences may be configured in some implementations. A combination of a DMRS port and a DMRS sequence may be regarded as a DMRS resource. A basic unit of MSGA PUSCH resources for mapping PRACH preambles may be a PUSCH resource, which may be defined through a PO and an associated DMRS resource.

In some implementations, configurations of POs for the MSGA PUSCH may be described as follows.

Specifically, a UE may determine a first RB for a first PO in an initial UL BWP or in an active UL BWP from a *frequencyStartMsgA PUSCH* that provides an offset, in a number of RBs in an initial UL BWP or in the active UL BWP, from a first RB of the initial UL BWP or the active UL BWP. A PO may include a number of RBs provided by an *nrofPRBs-perMsgA-PO.* Consecutive POs in the frequency domain of an initial UL BWP or an UL BWP may be separated by a number of RBs provided by a *guardBandMsgA-PUSCH.* A number $N_f$ of POs in the frequency domain of an initial UL BWP or an UL BWP may be provided by a *nrofMsgA-PO-FDM.*

If a UE does not have a dedicated RRC configuration, or has an initial UL BWP as an active UL BWP, or is not provided with a *startSymbolAndLengthMsgA-PO,* an *msgA-PUSCH-timeDomainAllocation* may provide an SLIV and a PUSCH mapping type for a PUSCH transmission by indicating:

- one of the first *maxNrofUL-Allocations* values from a *PUSCH-TimeDomainResourceAllocationList,* if the *PUSCH-TimeDomainResourceAllocationList* is provided in a *PUSCH-ConfigCommon;* and - one of the entries from table 6.1.2.1.1-2 or table 6.1.2.1.1-3 in 3GPP TS 38.214, if the *PUSCH-TimeDomainResourceAllocationList* is not provided in the *PUSCH-ConfigCommon;* else, the UE may be provided a SLIV by the *startSymbolAndLengthMsgA-PO,* and a PUSCH mapping type by a *mappingTypeMsgA-PUSCH* for a PUSCH transmission.

In some implementations, for mapping one or multiple preambles of a PRACH slot to a PO associated with a DMRS resource, a UE may determine a first slot for a first PO in an initial UL BWP or in an active UL BWP from an *msgA-PUSCH-TimeDomainOffset* that provides an offset, in number of slots in an initial UL BWP or in the active UL BWP, relative to the start of a PUSCH slot including the start of each PRACH slot. The UE may not expect to have a PRACH preamble transmission and a PUSCH transmission with an MSGA in a PRACH slot or in a PUSCH slot, or may not expect to have overlapping MSGA POs for an MSGA PUSCH configuration. The UE may expect that a first PO in each slot has a same SLIV for a PUSCH transmission that is provided by the *startSymbolAndLengthMsgA-PO* or the *msgA-PUSCH-timeDomainAllocation.*

In some implementations, consecutive POs within each slot may be separated by *guardPeriodMsgA-PUSCH* symbols and may have the same duration. A number $N_t$ of the time domain POs in each slot may be provided by an *nrofMsgA-PO-perSlot* and a number $N_s$ of consecutive slots that include POs may be provided by a *nrofSlotsMsgA-PUSCH.*

In some implementations, for mapping of PRACH preambles for the 2-step RA to MSGA PUSCH resources, each consecutive number of $N_{preamble}$ preamble indexes from valid ROs in a PRACH slot may be mapped to a valid PO and the associated DMRS resource. Mapping of each consecutive number of $N_{preamble}$ preamble indexes may comply with the following order:

- first, in an increasing order of preamble indexes within a single RO;
- second, in an increasing order of frequency resource indexes for frequency multiplexed ROs; and
- third, in an increasing order of time resource indexes for time multiplexed ROs within a PRACH slot.

In some implementations, Mapping of each valid PO and the associated DMRS resource may comply with the following order:

- first, in an increasing order of frequency resource indexes $f_{id}$ for frequency multiplexed POs;
- second, in an increasing order of DMRS resource indexes within a PO, where a DMRS resource index $DMRS_{id}$ is determined first in an ascending order of a DMRS port index and second in an ascending order of a DMRS sequence index;
- third, in an increasing order of time resource indexes $t_{id}$ for time multiplexed POs within a PUSCH slot; and
- fourth, in an increasing order of indexes for $N_s$ PUSCH slots.
- where $N_{preamble} = ceil(T_{preamble}/T_{PUSCH})$, $T_{preamble}$ is a total number of valid ROs per association pattern period multiplied by a number of preambles per valid RO provided by the *rach-ConfigCommonTwoStepRA,* and $T_{PUSCH}$ is a total number of valid POs per PUSCH configuration per association pattern period multiplied by a number of DMRS resource indexes per valid PO provided by the *msgA-DMRS-Config.*

In some implementations, POs configured by the msgA-PUSCH-ResourceGroupA-r16 and the msgA-PUSCH-ResourceGroupB-r16 may be subject to validation based on the following rules.

In one rule, a PO may be valid if the PO does not overlap in the time and frequency domains with any valid RO associated with either a 4-step RA procedure or a 2-step RA procedure. Additionally, more rules are introduced below for unpaired spectrum and for SSBs with indexes provided by the *ssb-PositionsInBurst* in the SIB1 or by the

*ServingCellConfigCommon.*

In another rule, for unpaired spectrum and for SSBs with indexes provided by the *ssb-PositionsInBurst* in the SIB1 or by the *ServingCellConfigCommon,* if a UE is not provided with the *tdd-UL-DL-ConfigurationCommon,* a PO is valid if the PO does not precede an SSB in the PUSCH slot and starts at least $N_{gap}$ symbols after a last SSB symbol, where $N_{gap}$ is provided in **Table 6,** as shown above.

In another rule, for unpaired spectrum and for SSBs with indexes provided by the *ssb-PositionsInBurst* in the SIB1 or by the *ServingCellConfigCommon,* if a UE is provided with the *tdd-UL-DL-ConfigurationCommon,* a PO is valid if the PO is within the UL symbols, or if the PO does not precede an SSB in the PUSCH slot and starts at least $N_{gap}$ symbols after a last downlink symbol and at least $N_{gap}$ symbols after a last SSB symbol. Specifically, $N_{gap}$ is provided in **Table 6** and, if *channelAccessMode = semistatic* is provided, does not overlap with a set of consecutive symbols before the start of a next channel occupancy time where the UE does not transmit.

In some implementations, (e.g., as specified in Rel-15) a UE in an RRC _CONNECTED state may be provided with a CG. The CG may be a Type-1 CG or a Type-2 CG. For a Type-1 CG, the UE may directly use the CG for UL transmission after receiving the CG configuration. For a Type-2 CG, the UE may not directly use the CG for UL transmission after receiving the CG configuration. To use the CG for UL transmission, the UE may need to receive an activation DCI activating the CG. A CG configuration may include a time domain symbol allocation, a frequency resource allocation, a DMRS configuration, a modulation and coding scheme (MCS), a periodicity, a number of repetitions, a number of HARQ processes, etc. The POs configured by the CG configuration may occur periodically in the time domain with the configured periodicity. Within each period, there may be POs in consecutive slots when the number of repetitions is greater than 1, and the number of consecutive slots is equal to the number of repetitions. As such, one slot may include one PO that is used for one repetition (e.g., each PO may be with the same symbol allocation). The HARQ process ID for a PO may be determined based on the system frame number and the slot number corresponding to the slot in which the PO is located. Specifically, the HARQ process ID associated with the first symbol of a UL transmission may be determined based on the following equation.

$$\text{HARQ Process ID} = [\text{floor}(\text{CURRENT\_symbol}/\textit{periodicity})] \text{ modulo } \textit{nrofHARQ-Processes,}$$

where CURRENT_symbol = (SFN × *numberOfSlotsPerFrame* × *numberOfSymbolsPerSlot* + slot number in the frame × *numberOfSymbolsPerSlot* + symbol number in the slot), and *numberOfSlotsPerFrame* and *numberOfSymbolsPerSlot* refer to a number of consecutive slots per frame and a number of consecutive symbols per slot, respectively (e.g., as specified in 3GPP TS 38.211).

In some implementations, (e.g., as specified in Rel-15) a DCI may be transmitted using one or more CCEs included in a CORESET. Configurations of a CORESET may include the PRBs having the frequency domain resource of the CORESET and with the number of OFDM symbols having the time domain resource of the CORESET. One or more SSs may be associated with a CORESET. An SS may define the frequency of occurrence of the associated CORESET, and one occurrence of the CORESET may be referred as a monitoring occasion. The configuration of an SS may include the periodicity and time offset of the SS and the duration of the SS, e.g., the consecutive number of slots in which one or more monitoring occasions exists. If duration is one, only one or more monitoring occasions within one slot may exist in each period. For a CORESET configured by a dedicated RRC signaling, one or more transmission configuration indicator (TCI) states and a MAC CE may be used to indicate the TCI state that is applied to the CORESET when more than one TCI states are configured for the CORESET. A TCI state may be associated with one or two RSs, which may be used as references for, for example, channel estimation and spatial filtering. The CORESET may be QCL with the RSs associated with the TCI state. In other words, the UE may receive a CORESET with the same receiving beam as what is used for receiving the RS associated with the applied TCI state. For a CORESET configured by a MIB or a SIB, different monitoring occasions of a CSS associated with the CORESET may be QCL with different SSBs. For example, for receiving a Type-0 CSS associated with a CORESET 0, when a monitoring occasion has a time offset (e.g., for an SSB), the monitoring occasion may be received assuming the CORESET is QCL with the SSB, where the time offset is determined by the configuration provided by a MIB.

In some implementations (e.g., as specified in Rel-15), the SIB1 may include information regarding the availability and scheduling (e.g., a mapping of SIBs to an SI message, a periodicity, an SI-window size, etc.) of other SIBs with an indication as whether one or more SIBs are only provided on-demand and, in if that is the case, the configuration needed by the UE to perform the SI request. The SIBs other than SIB1 may be carried in SI messages, which are transmitted on the DL-SCH. Only SIBs having the same periodicity may be mapped to the same SI message. Each SI message may be transmitted within periodically occurring time domain windows (e.g., may be referred to as SI-windows that have the same length for all SI messages). Each SI message may be associated with an SI-window, and the SI-windows of different SI messages may not overlap each other. Within one SI-window, only a corresponding SI message may be transmitted.

To enable a UE to transmit small data in an RRC_INACTIVE state, a CG configuration for an SDT may be provided to the UE. The CG configuration may be provided when the UE transitions from an RRC_CONNECTED state to an RRC_INACTIVE state, e.g., via an RRCRelease message.

**PUSCH validation**

In some implementations, the UE may perform a measurement on an SSB for the evaluation of whether a cell (re)selection is needed in the RRC_INACTIVE state. For the unpaired spectrum, since the DL symbols and UL symbols are time division multiplexed, some of the POs configured by the CG configuration for the SDT may not be within the UL symbols. As such, a validation rule may be needed to determine whether a PO is valid.

**Association period/association pattern period**

In some implementations, to implicitly indicate the preferred DL beam to a gNB, POs configured by the CG configuration for the SDT may be mapped to SSBs similar to an SSB-to-RO mapping. As such, the gNB may know a UE's preferred SSB may be an SSB_i upon detection of a PUSCH transmission in a PO mapped to the SSB_i. The gNB may transmit to the UE a DCI scheduling DL response message, a DCI scheduling retransmission, or a DCI scheduling subsequent transmission using the DL beam that is QCL with the SSB_i.

In some implementations, since POs of one CG period may not be able to map all the SSBs, an association period may need to be defined for mapping at least once for all the SSBs. The association pattern period may also be defined to determine a pattern between the POs and the SSB indexes. As such, the UE may know the SSB index mapped to a PO based on the time location of the PO within an association pattern period, which is beneficial for the UE implementation.

**PDCCH monitoring**

In some implementations, a USS may be provided for the UE to monitor a PDCCH for a DCI scheduling DL response message, a DCI scheduling retransmission, or a DCI scheduling subsequent transmission after the UE transmits on a PO configured by the CG configuration for the SDT. When the mapping ratio of an SSB to a PUSCH resource is greater than one, the gNB may not know exactly which SSB is selected by the UE. As such, the gNB may need to transmit the PDCCH with different QCL assumptions in different monitoring occasions, such that the UE may receive the PDCCH that is QCL with the SSB selected by the UE.

**PUSCH validation**

To deal with the issues as mentioned above, some embodiments and/or methods are introduced as follows.

In some implementations, a validation rule for POs configured by the CG configuration for the SDT for unpaired spectrum may include, but is not limited to, the following examples, where the SSB with indexes are provided by the *ssb-PositionsInBurst* in the SIB1 or by the *ServingCellConfigCommon.*

In one example validation rule, if a UE is not provided with the *tdd-UL-DL-ConfigurationCommon,* a PO is valid if the PO does not precede an SSB in the PUSCH slot and starts at least $N_{gap}$ + d symbols after the last SSB symbol, where $N_{gap}$ is provided in **Table 6.**

In another example validation rule, if a UE is provided with the *tdd-UL-DL-ConfigurationCommon,* a PO is valid if the PO is within UL symbols, or if the PO does not precede an SSB in the PUSCH slot and starts at least $N_{gap}$ + $d$ symbols after the last DL symbol and at least $N_{gap}$ + $d$ symbols after the last SSB symbol, where $N_{gap}$ is provided in **Table 6.** In addition, $d$ may be configured by the gNB or may be determined by the UE based on a value of TA. For example, $d = \left\lceil \frac{TA}{symbol\ duration} \right\rceil$, where $d$ is determined by the UE, and the TA is an absolute time duration of the TA applied for transmission of a CG PUSCH.

In another example, $N_{gap}$ + $d$ may be replaced by $N'_{gap}$ which may be configured by the gNB, and where $N'_{gap}$ may be larger than or equal to $N_{gap}$.

In another example, $d$ may be determined based on a BWP switching time, e.g., $d = \left\lceil \frac{T_{BWP\ switch}}{symbol\ duration} \right\rceil$, where the CG PUSCH is configured in a UL BWP other than an initial UL BWP. Specifically, the UE may not be able to transmit the CG PUSCH in the UL BWP after receiving the SSB without performing a BWP switching. It may happen, e.g., when the PRBs of the UL BWP do not include the SSB. In another example, $d$ may be determined based on the TA as discussed above, and the gNB may need to configure a DL BWP other the initial DL BWP configured by the MIB. The gNB may need to align the center frequency of the DL BWP and the UL BWP, and the gNB may need to ensure that the SSB can be received in the DL BWP, e.g., by a proper configuration of the DL BWP and the UL BWP, or by configuring a non-cell defining the SSB in the DL BWP.

In another example validation rule, for a UE supporting only a Type A half duplex-frequency division duplex (HD-FDD), or a UE operating in Type A HD-FDD, the $N_{gap}$ + $d$ may be replaced by $N_{RX-TX}$. Specifically, $N_{RX-TX} = \left\lceil \frac{T_{RX-TX}}{symbol\ duration} \right\rceil$, where $T_{RX-TX}$ is an absolute time duration for the UE to perform a receive-to-transmit switching. The $N_{gap}$ symbol(s) may not be needed for the paired spectrum since the $N_{gap}$ symbol is mainly used to mitigate interference by other gNB(s), which may not exist for the paired spectrum due to separation of a DL band and a UL band.

**Association period/association pattern period**

In some implementations, a subset of SSB(s) from the SSB with indexes provided by the *ssb-PositionsInBurst* in the SIB 1, or by the *ServingCellConfigCommon,* may be explicitly configured to be associated with a CG configuration for the SDT. A UE may only select an SSB to transmit a CG PUSCH in PUSCH resources associated with the SSB when an RSRP of the SSB is above a threshold. Multiple DMRS resources may be configured by the CG configuration for the SDT. One or more DMRS ports and one or more DMRS sequences may be configured. A combination of a DMRS port and a DMRS sequence may be regarded as a DMRS resource in some implementations. A PUSCH resource may be a basic unit for mapping the SSB indexes to PUSCH resources, which may be defined as a PO and an associated DMRS resource.

In one example, a mapping ratio of one or more SSBs to a PUSCH resource may be configured explicitly, as the mapping ratio R, and each R of consecutive SSB indexes associated with one CG configuration may be mapped to valid CG PUSCH resources with following orders:

- first, in an increasing order of DMRS resource indexes, where a DMRS resource index $DMRS_{id}$ may be determined first in an ascending order of a DMRS port index and second in an ascending order of a DMRS sequence index; and
- second, in an increasing order of CG period indexes in the association period;
- where the association period may be implicitly derived. The SSB to CG PUSCH association period is a duration of multiple of periodicities of CG configurations, which is the smallest time duration in a set that is determined by the periodicity of the CG configuration, such that all SSBs associated with the CG configurations may be mapped at least once to CG PUSCH resources.

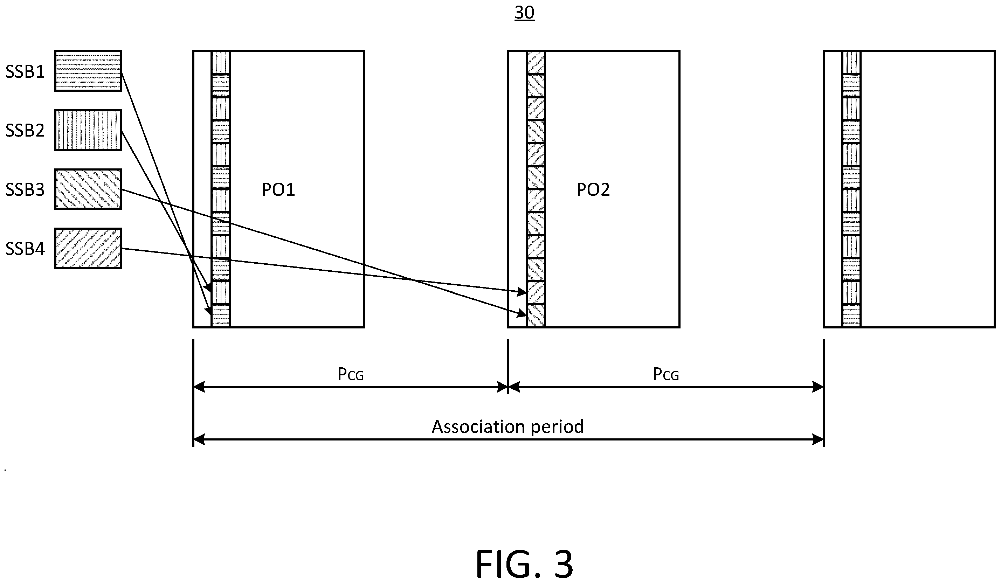

FIG. 3 is a diagram illustrating an SSB-index-to-PUSCH-resource mapping 30, according to a non claimed example implementation of the present disclosure. As shown in FIG. 3, the SSB1, SSB2, SSB3, and SSB4 are configured based on the SSB-index-to-PUSCH-resource mapping 30; the mapping ratio R is one; two DMRS ports are within a PO, and each DMRS port occupies six resource elements; and one DMRS sequence is configured. As such, one PO may have two associated PUSCH resources, where the first PUSCH resource may be associated with the first DMRS port, and the second PUSCH resource may be associated with the second DMRS port. It is assumed that a set of time durations determined by the periodicity of CG configuration is $P_{CG}$, $2 \cdot P_{CG}$, $4 \cdot P_{CG}$, and $8 \cdot P_{CG}$, where $P_{CG}$ is the periodicity of the CG configuration.

Specifically, as shown in FIG. 3, the SSB1 is mapped to the first PO (e.g., the PO1) and the associated first DMRS port; the SSB2 is mapped to the first PO (e.g., the PO1) and the associated second DMRS port; the SSB3 is mapped to the second PO (e.g., the PO2) and the associated first DMRS port; and the SSB4 is mapped to the second PO (e.g., the PO2) and the associated second DMRS port. Since each of the SSBs configured for the SSB-to-PUSCH resource mapping 30 is mapped to a PUSCH resource after 2 POs and $2 \cdot P_{CG}$ is the smallest time duration in the set of time durations, which is equal to or larger than the time duration that is needed to map the SSB indexes to PUSCH resources for at least one time for each SSB, the association period may be determined as $2 \cdot P_{CG}$.

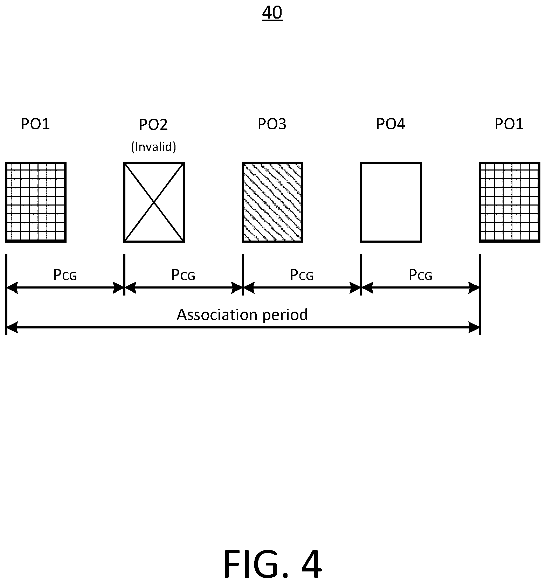

In some implementations, if there is a set of PUSCH resources that are not mapped to the SSB indexes after an integer number of SSB-index-to-PUSCH-resource mapping cycles within the association period, no SSB indexes may be mapped to the set of PUSCH resources. In other words, in some such implementations, if the set of PUSCH resources are not more enough to be mapped to the SSB indexes for one cycle, no SSB index may be mapped to the set of PUSCH resources. FIG. 4 is a diagram illustrating another SSB-index-to-PUSCH-resource mapping 40, according to the claimed invention. Similar assumptions may be made for FIG. 4 as the assumptions discussed above for FIG. 3, except that the second PO (e.g., the PO2) is invalid. No DMRS ports are shown in FIG. 4 for the sake of brevity. As shown in FIG. 4, the SSB1 is mapped to the first PO (e.g., the PO1) and the associated first DMRS port, the SSB2 is mapped to the first PO (e.g., the PO1) and the associated second DMRS port. Since the second PO (e.g., the PO2) is not valid, e.g., due to the PO2 being within $N_{gap}$ symbols after the end of one SSB, the SSB3 may be mapped to the third PO (e.g., the PO3) and the associated first DMRS port, and the SSB4 may be mapped to the third PO (e.g., PO3) and the associated second DMRS port. Since each of the SSBs that are configured based on the SSB-index-to-PUSCH-resource mapping is mapped to a PUSCH resource after three POs and $4 \cdot P_{CG}$ is the smallest time duration in the set of time durations, which is equal to or larger than the time duration that is needed to map the SSB indexes to the PUSCH resources for at least one time for each SSB, the association period may be determined as $4 \cdot P_{CG}$. Additionally, since only one PO is left (e.g., the PO4) after mapping the SSBs for one cycle, only two PUSCH resources associated with the PO4 may be used for mapping the SSB1 and the SSB2, but also no PUSCH resources may be used for mapping the SSB3 and the SSB4. As such, the PUSCH resources associated with the PO4 may not be used for mapping any SSB index(es).

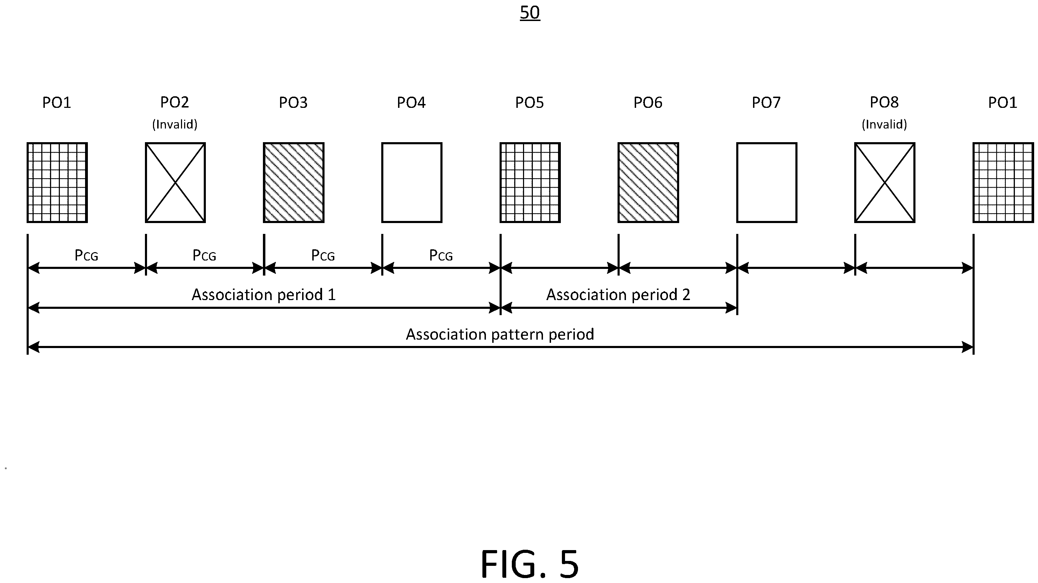

In some implementations, if there is a set of PUSCH resources that are not mapped to the SSB indexes after an integer number of association periods, no SSB indexes may be mapped to the set of PUSCH resources. In other words, if the set of PUSCH resources are not more enough to be mapped to the SSB indexes for one cycle, no SSB index may be mapped to the set of PUSCH resources and the time duration including the set of PUSCH resources may not be regarded as an association period. This may happen before the next association pattern period. An association pattern period may include one or more association periods and may be determined such that a pattern between CG POs and SSB indexes associated with the CG configuration may repeat at most every 640 ms. FIG. 5 is a diagram illustrating an association pattern period 50, according to the claimed invention. Similar assumptions may be made with reference to FIG. 5 as the ones made above with reference to FIG. 4. Additionally, compared to FIG. 4, more POs are shown in FIG. 5. As shown in FIG. 5, after the first association period (e.g., the association period 1), the SSB1 and the SSB2 are mapped to the PO5, and the SSB3 and the SSB4 are mapped to the PO6, where the PO5 and PO6 may be included in the second association period (e.g., the association period 2). As such, as shown in FIG. 5, since the PO8 is not valid and the set of PUSCH resources corresponding to the PO7 is not more enough to be mapped to four SSBs, and since a pattern between the POs and SSB indexes starts to repeat again after the PO8, the association pattern period 50 may be determined as eight times of the CG periodicity and the PO7 may not be used for mapping any SSB index.

In some implementations, if there is a set of PUSCH resources after one SSB-index-to-PUSCH-resource mapping cycle within the association period, no SSB indexes may be mapped to the set of PUSCH resources. This is beneficial for resource utilization since the gNB may configure the mapping ratio and the CG periodicity, such that a duration of one association period may match a periodicity of the traffic data. As such, one PUSCH resource in an association period may be more enough for transmitting the data.

In some implementations, if, after one association period, there is a set of PUSCH resources before the next association pattern period, no SSB indexes may be mapped to the set of PUSCH resources. This is beneficial for resource utilization since the gNB may configure the mapping ratio and CG periodicity, such that a duration of an association pattern period may match a periodicity of the traffic data. As such, one PUSCH resource in an association pattern period may be more enough for transmitting the data.

In some non claimed implementations, a set of values as an association period may be determined as $P_{CG} \cdot 2^N$, where $P_{CG}$ is the periodicity of the CG configuration, and $N = 0, 1, 2,..., N_{max}$, $N_{max}$ is the largest value, as $P_{CG} \cdot 2^{N_{max}}$ is smaller than or equal to 640 ms.

According to the claimed invention, a set of values as the association period is determined based on the periodicity of the CG configuration and the periodicity of the SSB, e.g., $P_{SSB}$, provided by an ssb-PeriodicityServingCell. One value of the set of values is dividable by the least common multiple (LCM) of the periodicity of the CG configuration and the periodicity of SSB, e.g., LCM ($P_{CG}$, $P_{SSB}$), and may divide the duration of a hyperframe, e.g., 10240 ms, or divide the duration of 640 ms. Specifically, if $P_{CG}$ is 8 ms and $P_{SSB}$ is 20 ms, the set of values may include {40 ms, 80 ms, 160 ms, 320 ms, 640 ms}.

In some implementations, the set of values as the association period may be determined based on the periodicity of the CG configuration and the periodicities being configured for the SSB, e.g., {5 ms, 10 ms, 20 ms, 40 ms, 80 ms, 160 ms}, which may be referred as $P_{SSB}^{Set}$. A value in the set of values may be equal to a value in $P_{SSB}^{Set}$ or equal to multiple of values in $P_{SSB}^{Set}$, e.g., 320 ms or 640 ms. In addition, the value in the set of values may be dividable by $P_{CG}$. Specifically, if $P_{CG}$ is 2 ms and $P_{SSB}$ is 20 ms, the set of values may include {10 ms, 20 ms, 40 ms, 80 ms, 160 ms, 320 ms, 640 ms}. Some implementations/examples/values for the CG PUSCH with 15kHz SCS and the CG PUSCH with 30kHz SCS are shown in **Table 8** (e.g., a set of values for association period for CG PUSCH with 15kHz SCS) and **Table 9** (e.g., a set of values for association period for CG PUSCH with 30kHz SCS) below. As such, the benefit of the above-mentioned embodiments/implementations may be that an association period may be equal to an association pattern period. In other words, the mapping of the SSB indexes to the POs in the association period may be the same as that of other association periods. Since the length of the association period is the effective periodicity for the SDT in the RRC _INACTIVE state, having the same length for the association periods may make configuration of the CG PUSCH be easier to accommodate the traffic characteristic (e.g., a periodic inter arrival time, etc.) of the SDT.

**Table 8**

| CG periodicity (slot) | Association period (ms) | CG periodicity (slot) | Association period (ms) |
|---|---|---|---|
| 1 | 5, 10, 20, 40, 80, 160, 320, 640 | 32 | 160, 320, 640 |
| 2 | 10, 20, 40, 80, 160, 320, 640 | 40 | 40, 80, 160, 320, 640 |
| 4 | 20, 40, 80, 160, 320, 640 | 64 | 320, 640 |
| 5 | 5, 10, 20, 40, 80, 160, 320, 640 | 80 | 80, 160, 320, 640 |
| 8 | 40, 80, 160, 320, 640 | 128 | 640 |
| 10 | 10, 20, 40, 80, 160, 320, 640 | 160 | 160, 320, 640 |
| 16 | 80, 160, 320, 640 | 320 | 320, 640 |
| 20 | 20, 40, 80, 160, 320, 640 | 640 | 640 |

**Table 9**

| CG periodicity (slot) | Association period (ms) | CG periodicity (slot) | Association period (ms) |
|---|---|---|---|
| 1 | 5, 10, 20, 40, 80, 160, 320, 640 | 40 | 20, 40, 80, 160, 320, 640 |

(continued)

| CG periodicity (slot) | Association period (ms) | CG periodicity (slot) | Association period (ms) |
|---|---|---|---|
| 2 | 5, 10, 20, 40, 80, 160, 320, 640 | 64 | 160, 320, 640 |
| 4 | 10, 20, 40, 80, 160, 320, 640 | 80 | 40, 80, 160, 320, 640 |
| 5 | 5, 10, 20, 40, 80, 160, 320, 640 | 128 | 320, 640 |
| 8 | 20, 40, 80, 160, 320, 640 | 160 | 80, 160, 320, 640 |
| 10 | 5, 10, 20, 40, 80, 160, 320, 640 | 256 | 640 |
| 16 | 40, 80, 160, 320, 640 | 320 | 160, 320, 640 |
| 20 | 10, 20, 40, 80, 160, 320, 640 | 640 | 320, 640 |
| 32 | 80, 160, 320, 640 | 1280 | 640 |

In some implementations, the HARQ process ID associated with the first symbol of a UL transmission in a CG PUSCH that is configured by the CG configuration for the SDT may be determined based on the following equation:

-

HARQ Process ID = [floor(CURRENT_symbol/T_association_patter_period)] modulo nrofHARQ-Processes, where CURRENT_symbol = (SFN $\times$ numberOfSlotsPerFrame $\times$ numberOfSymbolsPerSlot + slot number in the frame $\times$ numberOfSymbolsPerSlot + symbol number in the slot);

where numberOfSlotsPerFrame

and numberOfSymbolsPerSlot may refer to a number of consecutive slots per frame and a number of consecutive symbols per slot, respectively (e.g., as specified in 3GPP TS 38.211); and T_association_pattern_period may include the time duration of the association pattern period.

In some implementations, when there is more than one POs mapped to an SSB index in an association pattern period, the usage of the POs may be based on the following methods/alternatives:

- Alt. 1: Only the first PO mapped to an SSB index may be used by the UE; alternatively, other POs mapped to the SSB index may not be used by the UE.
- Alt. 2: Only one PO mapped to an SSB index may be used by the UE; alternatively, other POs mapped to the SSB index may not be used by the UE. The PO used by the UE may be selected by the UE. For example, the UE may choose the earliest available PO after the data has arrived.
- Alt. 3: The UE may use the first PO mapped to an SSB index for transmission of a first TB, and other POs mapped to the SSB index may be used for transmission of a second TB. As such, this method may apply the equation for determination of the HARQ process ID for a UL transmission with modification, e.g., to adaptively replace T_association_pattern_period with T_association_period, where T_association_period is the time duration of the association period. Specifically, the above-described equation may be modified as HARQ Process ID = [floor(CURRENT_symbol/T_association_pattern_period)] modulo nrofHARQ-Processes + offset, where the offset may be configured by the gNB to be applied for transmission of the second TB.
- Alt. 4: The UE may use the first PO mapped to an SSB index for transmission of a TB, and other POs mapped to the SSB index may be used for retransmission of the TB. A timer, e.g., a cg-RetransmissionTimer, may be configured to enable the retransmissions. The timer may be started or restarted after the transmission or retransmission of a TB, and the UE may retransmit the TB after the timer expires. The timer may be stopped after the association pattern period, within which the TB is transmitted, ends.

**PDCCH monitoring**

In some implementations, a UE may be provided (e.g., by a gNB) with a USS for monitoring a PDCCH after transmission in a CG PUSCH configured by the CG configuration for the SDT. The PDCCH may carry a DCI scheduling a DL message in response to the UL transmission in the CG PUSCH, or the DCI may schedule a UL grant for retransmission or subsequent transmission. A monitoring window may be defined for the PDCCH monitoring, such that the UE may only monitor the PDCCH within the monitoring window. The monitoring window may be defined as a period when a timer is running, where the timer may be started upon a UL transmission in the CG PUSCH.

In some implementation, when there are more than one CG configurations for the SDT, the gNB may provide more than one USS and each CG configuration may be associated with one USS. Alternatively, the gNB may provide a USS for all CG configurations.

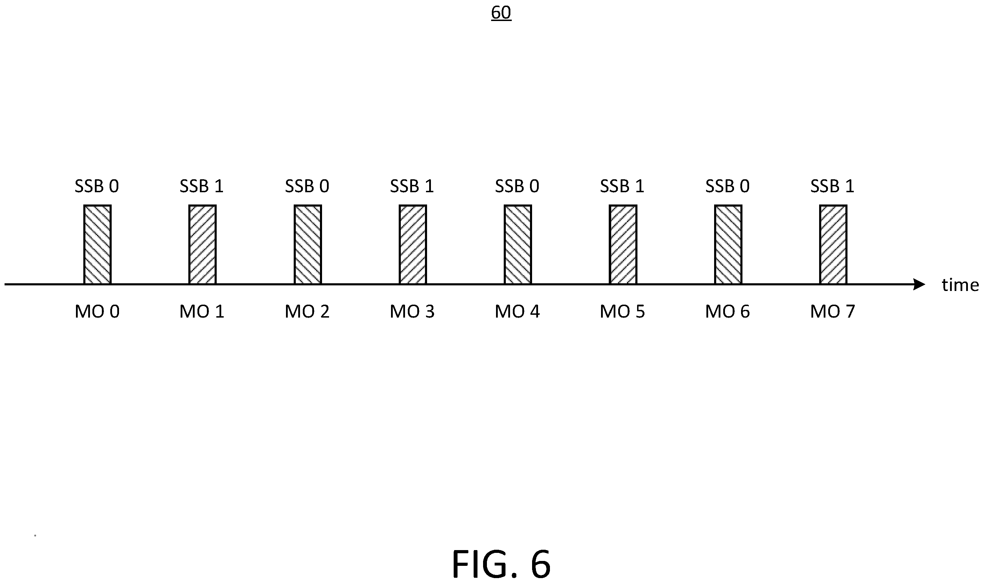

In some implementations, for a USS, the PDCCH in different monitoring occasions may be transmitted by the gNB with different QCL assumptions. The QCL assumptions may be known by the UE based on the configuration or based on one or more pre-configured rules, such that the UE may receive the PDCCH in a monitoring occasion with a suitable receiving beam. FIG. 6 is a diagram illustrating a cyclical mapping 60 of SSBs for monitoring occasions, according to an example implementation of the present disclosure. As shown in FIG. 6, the PDCCH in the monitoring occasions may be the QCL with the SSBs in the cyclical manner 60, which may be referred as an SSB-to-MO mapping in the following discussion. As shown in FIG. 6, when the SSB 0 the SSB 1 are associated with a CG configuration, the PDCCH transmitted in the MO 0, MO 2, MO 4, and MO 6 may include QCL with the SSB 0, and the PDCCH transmitted in the MO 1, MO 3, the MO 5, and MO 7 may include QCL with the SSB 1. The SSBs mapped to the monitoring occasions may include the SSBs that are mapped to the same PO and associated DMRS resource. Alternatively, the SSBs mapped to the monitoring occasions may include the SSBs that are configured to be associated with the CG configuration. This may be beneficial when more than one CG configuration are configured, since the UE may select different SSB(s) for the UL transmission in CG PUSCHs of different CG configurations, and the monitoring windows for the CG PUSCHs may overlap. Alternatively, the SSBs mapped to the monitoring occasions may include the SSBs that are configured to be associated with all CG configurations. Also, this may be beneficial when more than one CG configuration are configured and when different SSBs are associated with different CG configurations, since the UE may select different SSB(s) for the UL transmission in CG PUSCHs of different CG configurations, and the monitoring windows for the CG PUSCHs may overlap.

Some additional alternatives/embodiments/solutions are introduced for a mapping of SSBs to the monitoring occasions as follows.

Alt. a: The mapping of SSBs to the monitoring occasions may start from a fixed timing, e.g., the first monitoring occasion after a system frame 0.
Alt. b: The mapping of SSBs to the monitoring occasions may starts from the first monitoring occasion after the CG configuration for the SDT is received.
Alt. c: The mapping of SSBs to the monitoring occasions may start from the first monitoring occasion after the start of a monitoring window within which the PDCCH monitoring is performed.

In some implementations, the starting time of the monitoring window may be as follows.

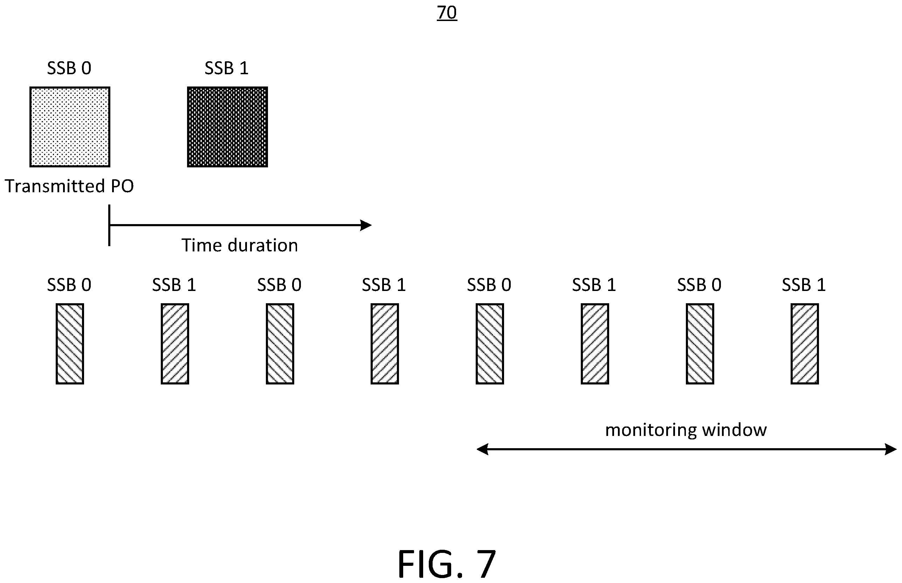

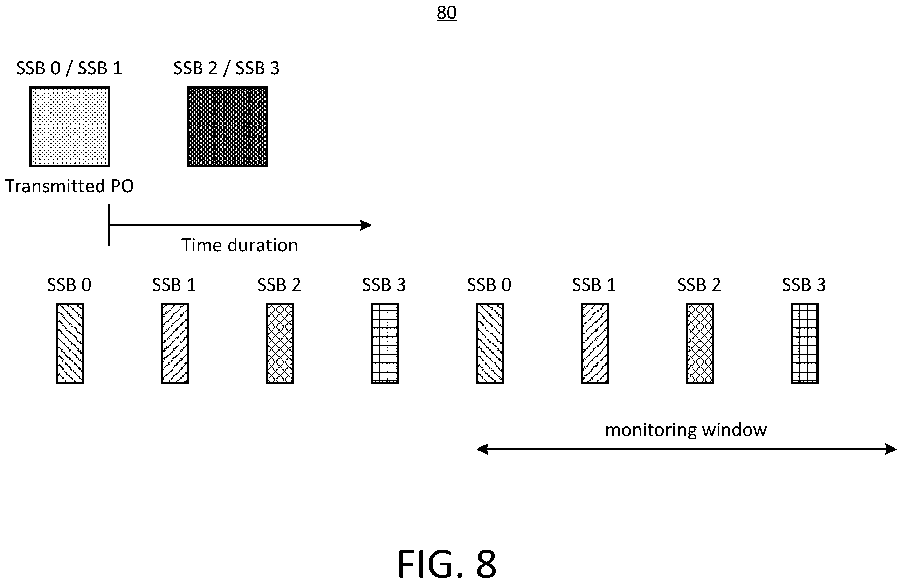

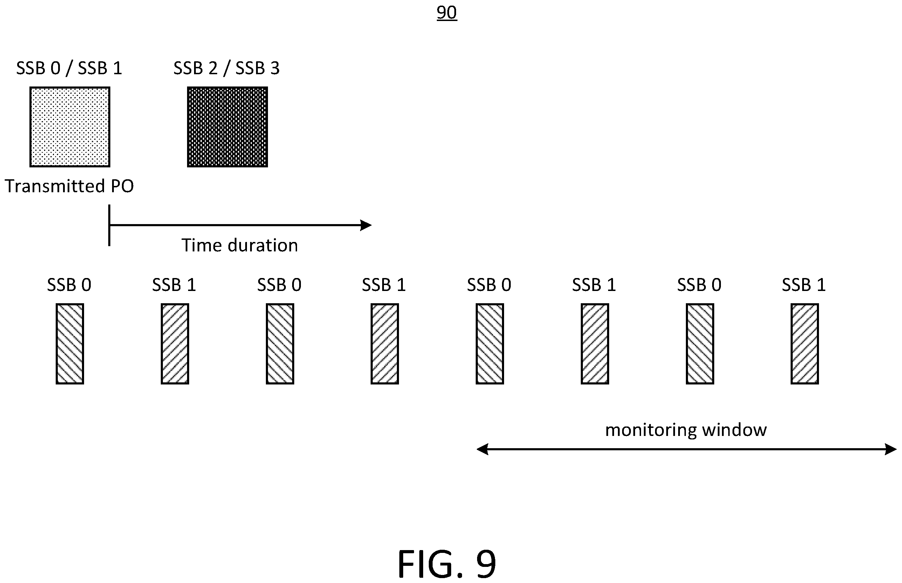

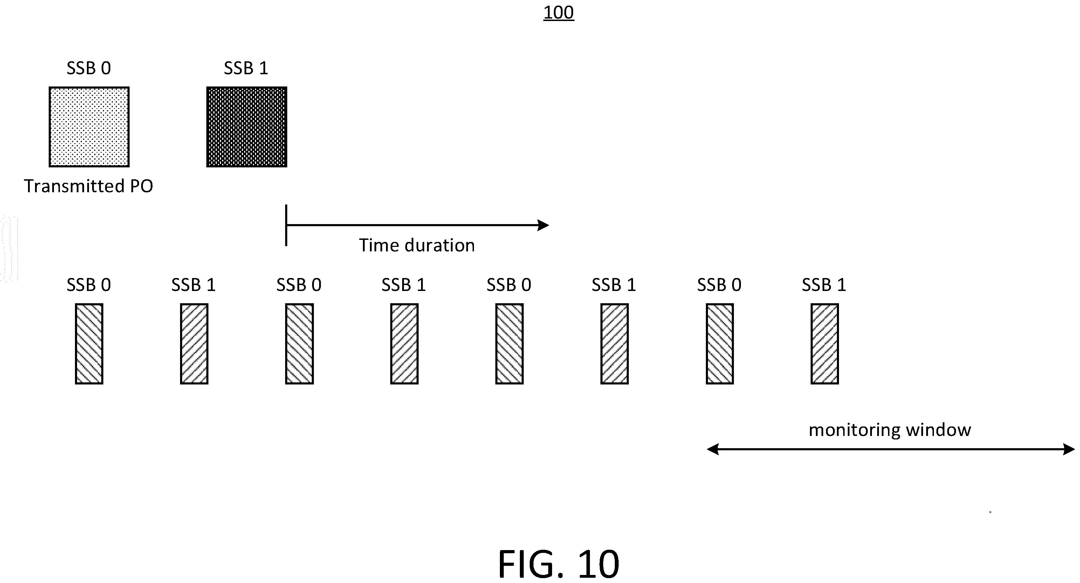

Alt. 1: The monitoring window may start at the first monitoring occasion associated with the selected SSB that is at least a time duration after the CG PUSCH transmission. FIG. 7 is a diagram illustrating a monitoring window 70, according to an example implementation of the present disclosure. As shown in FIG. 7, it is assumed that the SSB 0 and the SSB 1 are associated with the CG configuration, and the mapping of SSBs to the monitoring occasions may apply the alternatives/embodiments/solutions as mentioned in Alt. a or Alt. b, as discussed above. Specifically, the SSB 0 may be selected by the UE, and the monitoring occasion may start at the fifth monitoring occasion, as shown in FIG. 7.
Alt. 2: The monitoring window may start at the first monitoring occasion associated with the first SSB mapped to the same PO and associated DMRS resource, as the selected SSB, which is at least a time duration after the PUSCH transmission. FIG. 8 is a diagram illustrating a monitoring window 80 with SSBs associated with all POs being mapped, and FIG. 9 is a diagram illustrating a monitoring window 90 with SSBs associated with the same PO and mapping of an associated DMRS, according to example implementations of the present disclosure. As shown in FIG. 8, it is assumed that the SSB 0, the SSB 1, the SSB 2, and the SSB 3 are associated with the CG configuration, and the mapping of SSBs to the monitoring occasions may apply the alternatives/embodiments/solutions as mentioned above in Alt. a or Alt. b. Specifically, the SSB 1 may be selected by the UE, and the monitoring occasion may start at the fifth monitoring occasion, as shown in FIG. 8. As also shown in FIG. 8, in one example, the SSBs mapped to the monitoring occasions may be the SSBs that are configured to be associated with the CG configuration. As shown in FIG. 9, in another example, the SSBs mapped to the monitoring occasions may be the SSBs that are mapped to the same PO and associated DMRS resource as the selected SSB, e.g., the SSB 0 and the SSB 1.
Alt. 3: The monitoring window may start at the first monitoring occasion associated with the first SSB of the SSBs associated with the CG configuration, which is at least a time duration after a PO associated with the last SSB of the SSBs associated with the CG configuration. FIG. 10 is a diagram illustrating another example of a monitoring window 100, according to an example implementation of the present disclosure. As shown in FIG. 10, it is assumed that the SSB 0 and the SSB 1 are associated with the CG configuration, the mapping of SSBs to the monitoring occasions may apply the alternatives/embodiments/solutions as mentioned above in Alt. a or Alt. b. Specifically, the SSB 0 may be selected by the UE, and the monitoring occasion may start at the seventh monitoring occasion, as shown in FIG. 10.

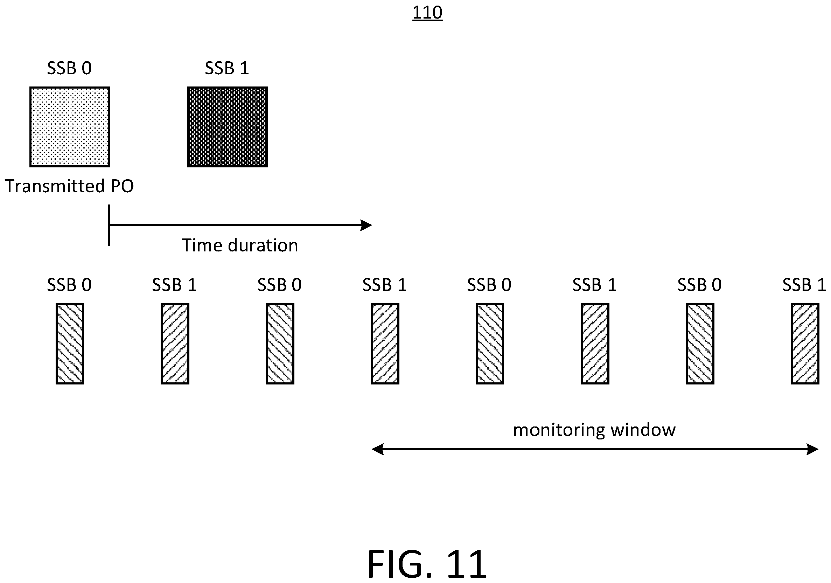

Alt. 4: The monitoring window may start at the first monitoring occasion which is at least a time duration after the PUSCH transmission. FIG. 11 is a diagram illustrating another example of a monitoring window 110, according to an example implementation of the present disclosure. As shown in FIG. 11, it is assumed that the SSB 0 and the SSB 1 are associated with the CG configuration, and the mapping of SSBs to the monitoring occasions may apply the alternatives/embodiments/solutions as mentioned above in Alt. a or Alt. b. Specifically, the SSB 0 may be selected by the UE, and the monitoring occasion may start at the fourth monitoring occasion, as shown in FIG. 11.

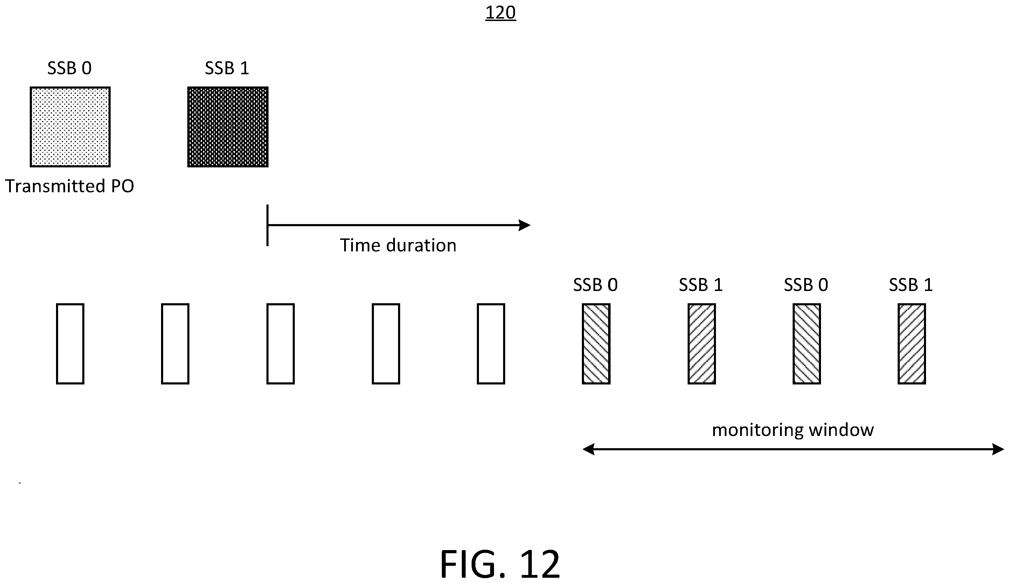

Alt. 5: The monitoring window may start at the first monitoring occasion which is at least a time duration after a PO associated with the last SSB of the SSBs associated with the CG configuration. FIG. 12 is a diagram illustrating another example of a monitoring window 120, according to an example implementation of the present disclosure. As shown in FIG. 12, it is assumed that the SSB 0 and SSB 1 are associated with the CG configuration, and the mapping of SSBs to the monitoring occasions may apply the alternatives/embodiments/solutions as mentioned above in Alt. c. Specifically, the SSB 0 may be selected by the UE, and the monitoring occasion and the mapping of SSBs to MO both may start at the sixth monitoring occasion, as shown in FIG. 12.

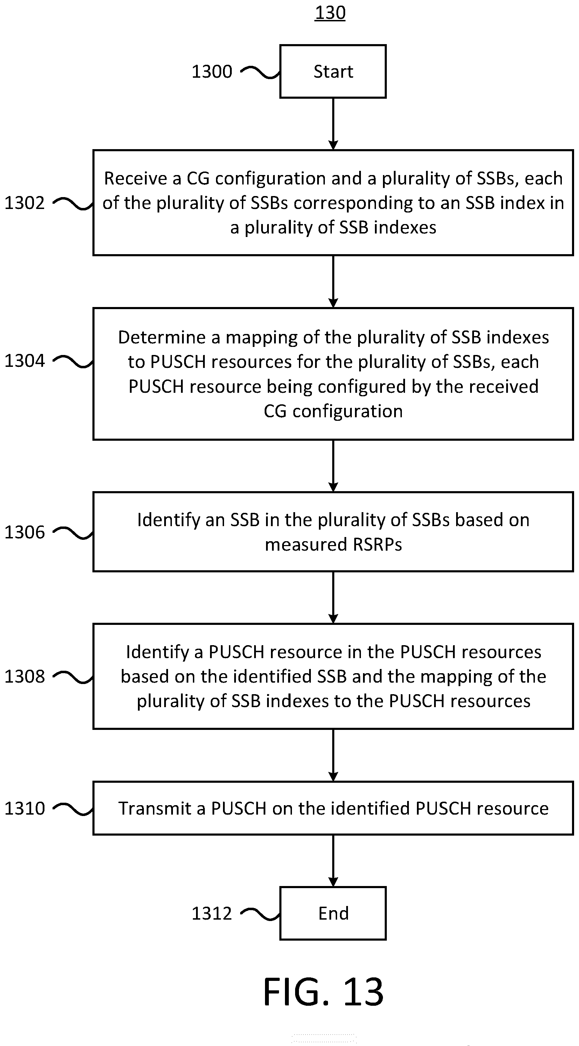

FIG. 13 is a flowchart illustrating a procedure 130 performed by a UE for transmitting a CG PUSCH, according to the claimed invention. In FIG. 13, the actions of the procedure 130, as illustrated in the figure, are separate actions that are represented as independent blocks. In some other implementations, these separate actions may not be construed as necessarily order dependent, where any two or more actions may also be performed and/or combined with each other or be integrated with other alternate actions, that are not limiting the scope of the disclosure. Moreover, in some implementations, one or more of the actions may be adaptively omitted.

As shown in FIG. 13, the procedure 130 for the UE includes the following actions:

Action 1300: Start.

Action 1302: Receive a CG configuration and a plurality of SSBs, each of the plurality of SSBs corresponding to an SSB index in a plurality of SSB indexes.

Action 1304: Determine a mapping of the plurality of SSB indexes to PUSCH resources for the plurality of SSBs, each PUSCH resource being configured by the received CG configuration.

Action 1306: Identify an SSB in the plurality of SSBs based on measured RSRPs.

Action 1308: Identify a PUSCH resource in the PUSCH resources based on the identified SSB and the mapping of the plurality of SSB indexes to the PUSCH resources.

Action 1310: Transmit a PUSCH on the identified PUSCH resource.

Action 1312: End.

In action 1302, the UE receives the CG configuration and the plurality of SSBs, where each of the plurality of SSBs may be corresponding to one SSB index in the plurality of SSB indexes. In some implementations, the plurality of SSBs may be associated with the CG configuration.

In action 1304, the UE determines the mapping of the plurality of SSB indexes to the PUSCH resources for the plurality of SSBs, where each PUSCH resource may be configured by the received CG configuration. In some implementations, each of the PUSCH resources may include an associated DMRS resource and a PO occupied in a CG period.

In action 1306, the UE identifies the SSB in the plurality of SSBs based on measured RSRPs. In action 1308, the UE identifies the PUSCH resource in the PUSCH resources based on the identified SSB and the mapping of the plurality of SSB indexes to the PUSCH resources. In action 1310, the UE transmits the PUSCH on the identified PUSCH resource.

The mapping of the plurality of SSB indexes to the PUSCH resources is configured in a first increasing order of DMRS resource indexes and in a second increasing order of CG period indexes within an association period. In some non claimed implementation, the association period may include one or more times of periodicities of the CG configuration and be determined from a set of time durations as a smallest time duration. In some implementation, the set of time durations may include one (1) time, two (2) times, four (4) times, five (5) times, eight (8) times, ten (10) times, sixteen (16) times, twenty (20) times, forty (40) times, or eighty (80) times of a periodicity of the CG configuration when the periodicity of the CG configuration is 8 milliseconds. A plurality of association periods, including the association period, refers to an association pattern period for periodically transmitting the PUSCH.

In some implementation, each SSB may be mapped to the identified PUSCH resource based on a mapping ratio R, where the R is a positive integer. In some implementation, each SSB may be mapped to a valid PUSCH resource.

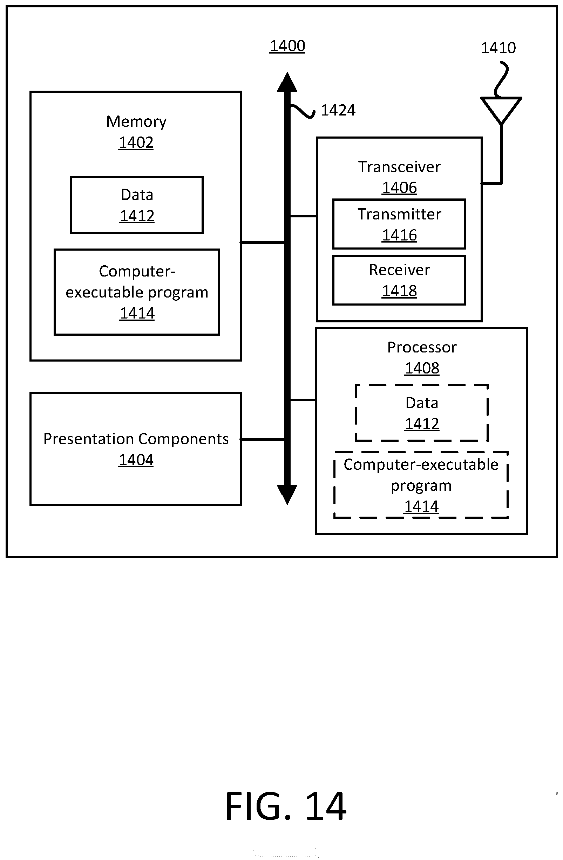

Please refer to FIG. 14, which is a block diagram illustrating a node 1400 for wireless communication, according to an implementation of the present disclosure. As illustrated in FIG. 14, the node 1400 includes a transceiver 1406, a processor 1408, a memory 1402, one or more presentation components 1404, and at least one antenna 1410. The node 1400 may also include a Radio Frequency (RF) spectrum band module, a BS communications module, an NW communications module, and a system communications management module, input/output (I/O) ports, I/O components, and power supply (not explicitly illustrated in FIG. 14). Each of these components may be in communication with each other, directly or indirectly, over one or more buses 1424. The node 1400 may be a UE, an NW, a cell/BS or any operating entity in the wireless communication system that performs various functions disclosed herein, for example, with reference to FIG. 13.

The transceiver 1406 includes a transmitter 1416 (e.g., transmitting/transmission circuitry) and a receiver 1418 (e.g., receiving/reception circuitry) and may be configured to transmit and/or receive time and/or frequency resource partitioning information. The transceiver 1406 may be configured to transmit in different types of subframes and slots, including, but not limited to, usable, non-usable and flexibly usable subframes and slot formats. The transceiver 1406 may be configured to receive data and control channels.

The node 1400 may include a variety of computer-readable media. Computer-readable media may be any available media that may be accessed by the node 1400 and include both volatile (and non-volatile) media and removable (and non-removable) media. By way of example, and not limitation, computer-readable media may include computer storage media and communication media. Computer storage media may include both volatile (and non-volatile) and removable (and non-removable) media implemented according to any method or technology for storage of information such as computer-readable.

Computer storage media includes RAM, ROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer storage media does not include a propagated data signal. Communication media may typically embody computer-readable instructions, data structures, program modules, or other data in a modulated data signal such as a carrier wave or other transport mechanism and include any information delivery media.

The term "modulated data signal" may refer to a signal that has one or more of its characteristics set or changed in such a manner as to encode information in the signal. By way of example, and not limitation, communication media may include wired media, such as a wired NW or direct-wired connection, and wireless media, such as acoustic, RF, infrared, and other wireless media. Combinations of any of the previous disclosure should also be included within the scope of computer-readable media.

The memory 1402 may include computer-storage media in the form of volatile and/or non-volatile memory. The memory 1402 may be removable, non-removable, or a combination thereof. For example, the memory 1502 may include solid-state memory, hard drives, optical-disc drives, etc.

As illustrated in FIG. 14, the memory 1402 may store a computer-executable (or readable) program 1414 (e.g., software codes or instructions) that are configured to, when executed, cause the processor 1408 to perform various functions disclosed herein, for example, with reference to FIG. 13. Alternatively, the computer-executable program 1414 may not be directly executable by the processor 1408 but may be configured to cause the node 1400 (e.g., when compiled and executed) to perform various functions disclosed herein.

The processor 1408 (e.g., having processing circuitry) may include an intelligent hardware device, a CPU, a microcontroller, an ASIC, etc. The processor 1408 may include memory. The processor 1408 may process the data 1412 and the computer-executable program 1414 received from the memory 1402, and information received via the transceiver 1406, the baseband communications module, and/or the NW communications module. The processor 1408 may also process information to be sent to the transceiver 1406 for transmission through the antenna 1410 to the NW communications module for subsequent transmission to a CN.

One or more presentation components 1404 may present data to a person or other device. Examples of presentation components 1404 may include a display device, speaker, printing component, vibrating component, etc.

From the present disclosure, it is manifested that various techniques may be used for implementing the disclosed concepts without departing from the scope of those concepts defined by the appended claims. As such, the disclosed implementations are to be considered in all respects as illustrative and not restrictive. It should also be understood that the present disclosure is not limited to the particular disclosed implementations.

## Claims

1.  A method performed by a user equipment, UE, for transmitting a Configured Grant, CG, Physical Uplink Shared Channel, PUSCH, the method comprising:

receiving a CG configuration and a plurality of Synchronization Signal Blocks, SSBs, each of the plurality of SSBs corresponding to an SSB index in a plurality of SSB indexes;

determining a mapping of the plurality of SSB indexes to PUSCH resources for the plurality of SSBs, each PUSCH resource being configured by the received CG configuration;

identifying an SSB in the plurality of SSBs based on measured Reference Signal Received Powers, RSRPs;

identifying a PUSCH resource in the PUSCH resources based on the identified SSB and the mapping of the plurality of SSB indexes to the PUSCH resources; and

transmitting a PUSCH on the identified PUSCH resource, wherein:

the mapping of the plurality of SSB indexes to the PUSCH resources is determined according to a first increasing order of DeModulation Reference Signal, DMRS, resource indexes and a second increasing order of CG period indexes within an association period,

the association period corresponds to a time duration in which each of the plurality of SSB indexes is mapped to a PUSCH resource configured by the CG configuration,

a periodicity of the CG configuration is 8 milliseconds,

the association period is determined based on the least common multiple, LCM, of the periodicity of the CG configuration and a periodicity of the plurality of SSBs,

a plurality of association periods, including the association period and a second association period, refers to an association pattern period for periodically transmitting the PUSCH,

the association period includes an invalid PUSCH Occasion, PO, to which no SSB is mapped, and

the association period and the second association period have different lengths.

2. The method of claim 1, wherein the plurality of SSBs is associated with the CG configuration.

3. The method of claim 1, wherein each of the PUSCH resources comprises an associated DMRS resource and a PO occupied in a CG period.

4. The method of claim 1, wherein each SSB is mapped to the identified PUSCH resource based on a mapping ratio R, the R being a positive integer.

5. The method of claim 1, wherein each SSB is mapped to a valid PUSCH resource.

6. A User Equipment, UE, of a wireless communication system for transmitting a Configured Grant, CG, Physical Uplink Shared Channel, PUSCH, the UE comprising:

at least one processor; and

at least one memory coupled to the at least one processor, the at least one memory storing one or more computer-executable instructions that, when executed by the at least one processor, cause the UE to:

receive a CG configuration and a plurality of Synchronization Signal Blocks, SSBs, each of the plurality of SSBs corresponding to an SSB index in a plurality of SSB indexes;

determine a mapping of the plurality of SSB indexes to PUSCH resources for the plurality of SSBs, each PUSCH resource being configured by the received CG configuration;

identify an SSB in the plurality of SSBs based on measured Reference Signal Received Powers, RSRPs;

identify a PUSCH resource in the PUSCH resources based on the identified SSB and the mapping of the plurality of SSB indexes to the PUSCH resources; and

transmit a PUSCH on the identified PUSCH resource, wherein:

the mapping of the plurality of SSB indexes to the PUSCH resources is determined according to a first increasing order of DeModulation Reference Signal, DMRS, resource indexes and a second increasing order of CG period indexes within an association period,

the association period corresponds to a time duration in which each of the plurality of SSB indexes is mapped to a PUSCH resource configured by the CG configuration,

a periodicity of the CG configuration is 8 milliseconds,

the association period is determined based on the least common multiple, LCM, of the periodicity of the CG configuration and a periodicity of the plurality of SSBs,

a plurality of association periods, including the association period and a second association period, refers to an association pattern period for periodically transmitting the PUSCH,

the association period includes an invalid PUSCH Occasion, PO, to which no SSB is mapped, and the association period and the second association period have different lengths.

**7.** The UE of claim 6, wherein the plurality of SSBs is associated with the CG configuration.

**8.** The UE of claim 6, wherein each of the PUSCH resources comprises an associated DMRS resource and a PO occupied in a CG period.

**9.** The UE of claim 6, wherein each SSB is mapped to the identified PUSCH resource based on a mapping ratio R, the R being a positive integer.

**10.** The UE of claim 6, wherein each SSB is mapped to a valid PUSCH resource.

**Patentansprüche**

**1.** Verfahren, das von einem Nutzerendgerät, UE durchgeführt wird, um einen gemeinsam genutzten physikalischen Uplink-Kanal, PUSCH, mit konfigurierter Genehmigung, CG, zu übertragen, wobei das Verfahren aufweist:

Empfangen einer CG-Konfiguration und einer Vielzahl von Synchronisationssignalblöcken, SSBs, wobei jeder der Vielzahl von SSBs einem SSB-Index in einer Vielzahl von SSB-Indizes entspricht;
Bestimmen einer Abbildung der Vielzahl von SSB-Indizes auf PUSCH-Ressourcen für die Vielzahl von SSBs, wobei jede PUSCH-Ressource durch die empfangene CG-Konfiguration konfiguriert wird;
Identifizieren eines SSB in der Vielzahl von SSBs basierend auf gemessenen Empfangsleistungen von Referenzsignalen, RSRPs;
Identifizieren einer PUSCH-Ressource in den PUSCH-Ressourcen basierend auf dem identifizierten SSB und der Abbildung der Vielzahl von SSB-Indizes auf die PUSCH-Ressourcen; und
Übertragen eines PUSCH auf der identifizierten PUSCH-Ressource, wobei:

die Abbildung der Vielzahl von SSB-Indizes auf die PUSCH-Ressourcen gemäß einer ersten aufsteigenden Reihenfolge von Ressouren-Indizes eines DeModulations-Referenzsignals, DMRS, und einer zweiten aufsteigenden Reihenfolge der CG-Periodenindizes innerhalb einer Assoziierungsperiode bestimmt wird,
die Assoziierungsperiode einer Zeitdauer entspricht, in der jeder der Vielzahl von SSB-Indizes auf eine durch die CG-Konfiguration konfigurierte PUSCH-Ressource abgebildet wird,
eine Periodizität der CG-Konfiguration 8 Millisekunden beträgt,
die Assoziierungsperiode basierend auf dem kleinsten gemeinsamen Vielfachen, LCM, der Periodizität der CG-Konfiguration und einer Periodizität der Vielzahl von SSBs bestimmt wird,
sich eine Vielzahl von Assoziierungsperioden, die die Assoziierungsperiode und eine zweite Assoziierungsperiode umfasst, auf eine Assoziierungsmusterperiode zum periodischen Übertragen des PUSCH bezieht,
die Assoziierungsperiode eine ungültige PUSCH-Gelegenheit, PO, enthält, auf die kein SSB abgebildet wird, und
die Assoziierungsperiode und die zweite Assoziierungsperiode unterschiedliche Längen haben.

**2.** Verfahren nach Anspruch 1, wobei die Vielzahl von SSBs mit der CG-Konfiguration assoziiert ist.

**3.** Verfahren nach Anspruch 1, wobei jede der PUSCH-Ressourcen eine assoziierte DMRS-Ressource und eine besetzte PO in einer CG-Periode aufweist.

**4.** Verfahren nach Anspruch 1, wobei jeder SSB basierend auf einem Abbildungsverhältnis R, wobei das R eine positive ganze Zahl ist, auf die identifizierte PUSCH-Ressource abgebildet wird.

**5.** Verfahren nach Anspruch 1, wobei jeder SSB auf eine gültige PUSCH-Ressource abgebildet wird.

**6.** Nutzerendgerät, UE, eines Systems für drahtlose Kommunikation, um einen gemeinsam genutzten physikalischen Uplink-Kanal, PUSCH, mit konfigurierter Genehmigung, CG, zu übertragen, wobei das UE aufweist:

zumindest einen Prozessor; und
zumindest einen Speicher, der mit dem zumindest einen Prozessor gekoppelt ist, wobei der zumindest eine Speicher eine oder mehrere, von einem Computer ausführbare Anweisungen speichert, die, wenn sie von dem zumindest einen Prozessor ausgeführt werden, veranlassen, dass das UE:

eine CG-Konfiguration und eine Vielzahl von Synchronisationssignalblöcken, SSBs, empfängt, wobei jeder der Vielzahl von SSBs einem SSB-Index in einer Vielzahl von SSB-Indizes entspricht;
eine Abbildung der Vielzahl von SSB-Indizes auf PUSCH-Ressourcen für die Vielzahl von SSBs bestimmt, wobei jede PUSCH-Ressource durch die empfangene CG-Konfiguration konfiguriert wird;
einen SSB in der Vielzahl von SSBs basierend auf gemessenen Empfangsleistungen von Referenzsignalen, RSRPs, identifiziert;
eine PUSCH-Ressource in den PUSCH-Ressourcen basierend auf dem identifizierten SSB und der Abbildung der Vielzahl von SSB-Indizes auf die PUSCH-Ressourcen identifiziert; und
einen PUSCH auf der identifizierten PUSCH-Ressource überträgt, wobei:

die Abbildung der Vielzahl von SSB-Indizes auf die PUSCH-Ressourcen gemäß einer ersten aufsteigenden Reihenfolge von Ressouren-Indizes eines DeModulations-Referenzsignals, DMRS, und einer zweiten aufsteigenden Reihenfolge der CG-Periodenindizes innerhalb einer Assoziierungsperiode bestimmt wird,
die Assoziierungsperiode einer Zeitdauer entspricht, in der jeder der Vielzahl von SSB-Indizes auf eine durch die CG-Konfiguration konfigurierte PUSCH-Ressource abgebildet wird,
eine Periodizität der CG-Konfiguration 8 Millisekunden beträgt,
die Assoziierungsperiode basierend auf dem kleinsten gemeinsamen Vielfachen, LCM, der Periodizität der CG-Konfiguration und einer Periodizität der Vielzahl von SSBs bestimmt wird,
sich eine Vielzahl von Assoziierungsperioden, die die Assoziierungsperiode und eine zweite Assoziierungsperiode umfasst, auf eine Assoziierungsmusterperiode zum periodischen Übertragen des PUSCH bezieht,
die Assoziierungsperiode eine ungültige PUSCH-Gelegenheit, PO, enthält, auf die kein SSB abgebildet wird, und
die Assoziierungsperiode und die zweite Assoziierungsperiode unterschiedliche Längen haben.

7. UE nach Anspruch 6, wobei die Vielzahl von SSBs mit der CG-Konfiguration assoziiert ist.

8. UE nach Anspruch 6, wobei jede der PUSCH-Ressourcen eine assoziierte DMRS-Ressource und eine besetzte PO in einer CG-Periode aufweist.

9. UE nach Anspruch 6, wobei jeder SSB basierend auf einem Abbildungsverhältnis R, wobei das R eine positive ganze Zahl ist, auf die identifizierte PUSCH-Ressource abgebildet wird.

10. UE nach Anspruch 6, wobei jeder SSB auf eine gültige PUSCH-Ressource abgebildet wird.

**Revendications**

1. Procédé réalisé par un équipement utilisateur, UE, pour transmettre un canal partagé de liaison montante physique, PUSCH, d'octroi configuré, CG, le procédé comprenant :

la réception d'une configuration CG et d'une pluralité de blocs de signaux de synchronisation, SSB, chacun de la pluralité de SSB correspondant à un indice SSB dans une pluralité d'indices SSB ;
la détermination d'un mappage de la pluralité d'indices SSB avec des ressources PUSCH pour la pluralité de SSB, chaque ressource PUSCH étant configurée par la configuration CG reçue ;
l'identification d'un SSB dans la pluralité de SSB sur la base de puissances reçues de signal de référence, RSRP, mesurées ;
l'identification d'une ressource PUSCH dans les ressources PUSCH sur la base du SSB identifié et du mappage de la pluralité d'indices SSB avec les ressources PUSCH ; et
la transmission d'un PUSCH sur la ressource PUSCH identifiée, dans lequel :

le mappage de la pluralité d'indices SSB avec les ressources PUSCH est déterminé selon un premier ordre croissant d'indices de ressources de signal de référence de démodulation, DMRS, et d'un second ordre croissant d'indices de période CG à l'intérieur d'une période d'association,

la période d'association correspond à une durée pendant laquelle chacun de la pluralité d'indices SSB est mappé avec une ressource PUSCH configurée par la configuration CG,

une périodicité de la configuration CG est de 8 millisecondes,

la période d'association est déterminée sur la base du plus petit multiple commun, LCM, de la périodicité de la configuration CG et d'une périodicité de la pluralité de SSB,

une pluralité de périodes d'association, y compris la période d'association et une seconde période d'association, font référence à une période de motif d'association pour transmettre périodiquement le PUSCH,

la période d'association comprend une occasion PUSCH, PO, non valide avec laquelle aucun SSB n'est mappé, et

la période d'association et la seconde période d'association présentent des longueurs différentes.

2. Procédé selon la revendication 1, dans lequel la pluralité de SSB sont associés à la configuration CG.

3. Procédé selon la revendication 1, dans lequel chacune des ressources PUSCH comprend une ressource DMRS associée et une PO occupée dans une période CG.

4. Procédé selon la revendication 1, dans lequel chaque SSB est mappé avec la ressource PUSCH identifiée sur la base d'un taux de mappage R, R étant un nombre entier positif.

5. Procédé selon la revendication 1, dans lequel chaque SSB est mappé avec une ressource PUSCH valide.

6. Équipement utilisateur, UE, d'un système de communication sans fil pour transmettre un canal partagé de liaison montante physique, PUSCH, d'octroi configuré, CG, l'UE comprenant :

au moins un processeur ; et

au moins une mémoire couplée à l'au moins un processeur, l'au moins une mémoire stockant une ou plusieurs instructions exécutables par ordinateur qui, lorsqu'elles sont exécutées par l'au moins un processeur, amènent l'UE à :

recevoir une configuration CG et une pluralité de blocs de signaux de synchronisation, SSB, chacun de la pluralité de SSB correspondant à un indice SSB dans une pluralité d'indices SSB ;

déterminer un mappage de la pluralité d'indices SSB avec des ressources PUSCH pour la pluralité de SSB, chaque ressource PUSCH étant configurée par la configuration CG reçue ;

identifier un SSB dans la pluralité de SSB sur la base de puissances reçues de signal de référence, RSRP, mesurées ;

identifier une ressource PUSCH dans les ressources PUSCH sur la base du SSB identifié et du mappage de la pluralité d'indices SSB avec les ressources PUSCH ; et

transmettre un PUSCH sur la ressource PUSCH identifiée, dans lequel :

le mappage de la pluralité d'indices SSB avec les ressources PUSCH est déterminé selon un premier ordre croissant d'indices de ressources de signal de référence de démodulation, DMRS, et d'un second ordre croissant d'indices de période CG à l'intérieur d'une période d'association,

la période d'association correspond à une durée pendant laquelle chacun de la pluralité d'indices SSB est mappé avec une ressource PUSCH configurée par la configuration CG,

une périodicité de la configuration CG est de 8 millisecondes,

la période d'association est déterminée sur la base du plus petit multiple commun, LCM, de la périodicité de la configuration CG et d'une périodicité de la pluralité de SSB,

une pluralité de périodes d'association, y compris la période d'association et une seconde période d'association, font référence à une période de motif d'association pour transmettre périodiquement le PUSCH,

la période d'association comprend une occasion PUSCH, PO, non valide avec laquelle aucun SSB n'est mappé, et

la période d'association et la seconde période d'association présentent des longueurs différentes.

7. UE selon la revendication 6, dans lequel la pluralité de SSB sont associés à la configuration CG.

8. UE selon la revendication 6, dans lequel chacune des ressources PUSCH comprend une ressource DMRS associée et une PO occupée dans une période CG.

**9.** UE selon la revendication 6, dans lequel chaque SSB est mappé avec la ressource PUSCH identifiée sur la base d'un taux de mappage R, R étant un nombre entier positif.

**10.** UE selon la revendication 6, dans lequel chaque SSB est mappé avec une ressource PUSCH valide.

10

| SSB2(1) | SSB2(2) | SSB2(3) | SSB2(4) | SSB2(5) | SSB2(6) | SSB2(7) | SSB2(8) |
|---------|---------|---------|---------|---------|---------|---------|---------|
| SSB1(1) | SSB1(2) | SSB1(3) | SSB1(4) | SSB1(5) | SSB1(6) | SSB1(7) | SSB1(8) |

FIG. 1

EP 4 161 200 B1

| SSB1(2) | SSB2(2) | SSB1(4) | SSB2(4) | SSB1(6) | SSB2(6) | SSB1(8) | SSB2(8) |
|---------|---------|---------|---------|---------|---------|---------|---------|
| SSB1(1) | SSB2(1) | SSB1(3) | SSB2(3) | SSB1(5) | SSB2(5) | SSB1(7) | SSB2(7) |

# FIG. 2

EP 4 161 200 B1

FIG. 3

40

PO1  PO2  PO3  PO4  PO1
     (Invalid)

$P_{CG}$  $P_{CG}$  $P_{CG}$  $P_{CG}$

Association period

FIG. 4

EP 4 161 200 B1

50

PO1     PO2 (Invalid)     PO3     PO4     PO5     PO6     PO7     PO8 (Invalid)     PO1

$P_{CG}$    $P_{CG}$    $P_{CG}$    $P_{CG}$

Association period 1      Association period 2

Association pattern period

FIG. 5

EP 4 161 200 B1

EP 4 161 200 B1

FIG. 6

70

SSB 0

SSB 1

Transmitted PO

Time duration

SSB 0    SSB 1    SSB 0    SSB 1    SSB 0    SSB 1    SSB 0    SSB 1

monitoring window

# FIG. 7

80

SSB 0 / SSB 1    SSB 2 / SSB 3

Transmitted PO

Time duration

SSB 0    SSB 1    SSB 2    SSB 3    SSB 0    SSB 1    SSB 2    SSB 3

monitoring window

FIG. 8

EP 4 161 200 B1

90

SSB 0 / SSB 1

SSB 2 / SSB 3

Transmitted PO

Time duration

SSB 0   SSB 1   SSB 0   SSB 1   SSB 0   SSB 1   SSB 0   SSB 1

monitoring window

# FIG. 9

FIG. 10

EP 4 161 200 B1

FIG. 11

120

SSB 0    SSB 1

Transmitted PO

Time duration

SSB 0    SSB 1    SSB 0    SSB 1

monitoring window

# FIG. 12

<u>130</u>

1300 — Start

1302 — Receive a CG configuration and a plurality of SSBs, each of the plurality of SSBs corresponding to an SSB index in a plurality of SSB indexes

1304 — Determine a mapping of the plurality of SSB indexes to PUSCH resources for the plurality of SSBs, each PUSCH resource being configured by the received CG configuration

1306 — Identify an SSB in the plurality of SSBs based on measured RSRPs

1308 — Identify a PUSCH resource in the PUSCH resources based on the identified SSB and the mapping of the plurality of SSB indexes to the PUSCH resources

1310 — Transmit a PUSCH on the identified PUSCH resource

1312 — End

# FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZTE.** Summary on the physical layer aspects of small data transmission. *3GPP DRAFT; R1-2108561,* 27 August 2021, vol. RAN WG1 (e-Meeting, https://ftp.3gpp.org/tsg_ran/WG1_RL1/TSGR1_106-e /Inbox/R1-2108561.zip

- Summary on the physical layer aspects of small data transmission.dox. *R1-2108561*